# EUROPÄISCHE PATENTSCHRIFT

(11) **EP 2 193 965 B1**
(45) Veröffentlichungstag und Bekanntmachung des Hinweises auf die Patenterteilung: **19.06.2013**
(21) Anmeldenummer: 09175165.1
(22) Anmeldetag: 05.11.2009
(51) Int. Cl.: B60T 13/14, B60T 13/24, B60T 13/26, B60T 13/50, B60T 15/02, B60T 15/04, B60T 15/20, B60T 15/22

(54) **Pneumatische Bremsanlage mit einem auf einem Anhänger angeordneten Parkventil**
Pneumatic braking system for a tractor-trailer vehicle with parking valve located on the trailer
Installation de freinage pneumatique dotée d'une valve pour frein de stationnement localisée sur le remorque

(30) Priorität: 06.12.2008 DE 102008060912
(43) Veröffentlichungstag der Anmeldung: 09.06.2010
(73) Patentinhaber: Haldex Brake Products GmbH, 69123 Heidelberg (DE)
(72) Erfinder: Maltry, Helmut, 69226 Nussloch (DE)
(74) Vertreter: Rehberg Hüppe + Partner

(56) Entgegenhaltungen:
- EP-A1- 0 415 689
- WO-A1-03/080417
- WO-A1-2004/060734
- DE-A1- 3 740 077
- DE-A1-102007 008 504
- US-A- 3 892 444
- US-A1- 2007 262 637
- US-A1- 2008 224 532

## Beschreibung

### TECHNISCHES GEBIET DER ERFINDUNG

Die Erfindung betrifft eine pneumatische Bremsanlage mit einem auf einem Anhänger angeordneten und manuell betätigten Parkventil gemäß dem Oberbegriff des Patentanspruchs 1. Weiterhin betrifft die Erfindung eine Verwendung einer derartigen Bremsanlage.

### STAND DER TECHNIK

Bekannte pneumatische Bremsanlagen besitzen im Bereich eines Anhängers ein Parkventil, dessen Einsatz gesetzlich vorgeschrieben ist und über welches für geparkten Anhänger selektiv eine als Federspeicherbremse ausgebildete Parkbremse betätigt und gelöst werden kann. Hierzu besitzt das Parkventil eine erste Betriebsstellung, in welcher die Federspeicherbremse des Anhängers wirksam ist, also über das Parkventil eine Federspeicherbremskammer der Federspeicherbremse entlüftet ist. Weiterhin besitzt das Parkventile eine zweite Betriebsstellung, in der die Federspeicherbremse gelöst ist, also die Federspeicherkammer der Federspeicherbremse mit einem Druck, beispielsweise aus einem Vorratsbehälter, über das Parkventil beaufschlagt ist. Beispielhafte derartige pneumatische Bremsanlagen sind insbesondere der nicht vorveröffentlichten Patentanmeldung DE 10 2007 053 765, DE 10 2007 053 764 der Anmelderin oder dem Gebrauchsmuster DE 201 22 779 U1 zu entnehmen. Weiterer Stand der Technik ist aus DE 103 36 611 A1, DE 601 13 192 T2 und DE 10 2007 014 427 A1 bekannt.

Als problematisch bei derartigen Bremsanlagen kann sich herausstellen, dass ein Zugfahrzeug mit dem Anhänger gekoppelt wird, wenn die Federspeicherbremse noch wirksam ist. Will der Fahrer mit dem mit Zugfahrzeug und Anhänger gebildeten Zug losfahren, so erfordert dies zwingend die Betätigung des Parkventils, nämlich die Überführung des Parkventils aus der ersten Betriebsstellung in die zweite Betriebsstellung. Vergisst der Fahrer aber das Lösen der Federspeicherbremse, fährt der Fahrer infolge der immer stärker werdenden Zugmaschinen von Nutzfahrzeugen unter Umständen los, ohne zunächst zu merken, dass die Räder des Anhängers blockieren. Dies führt zu einem instabilen Fahrzustand und einer Abnutzung der Reifen des Anhängers, die bis hin zu einer Beschädigung oder einem Brand führen kann.

US 2007/0262637 A1 betrifft eine druckluftbetriebene Bremsanlage für ein Motorfahrzeug, welches mit einer Feststellbremse ausgestattet ist. Das Motorfahrzeug soll gemäß dieser Druckschrift mit einer Ventilanordnung ausgestattet werden, welche sowohl für eine Parkbremse als auch für eine Betriebsbremse zuständig ist. Das Zugfahrzeug kann hierbei auch manuell betätigte Schalter besitzen, deren Signale einer Steuereinheit des Motorfahrzeugs zugeführt werden, die dann Parkbremsen des Zugfahrzeugs und eines Anhängers sowie Betriebsbremsen betätigen und/oder lösen kann. Die Steuereinheit kann ergänzend den Status des Fahrzeugs ermitteln, wozu die Steuereinheit Daten von Eingangsquellen empfangen kann, auf Grundlage welcher ermittelt werden kann, ob sich das Fahrzeug in einem sicheren oder unsicheren Betriebszustand befindet. Hierbei kann es sich beispielsweise um die Fahrzeuggeschwindigkeit, eine Drehzahl des Antriebsaggregates, einen Getriebezustand, eine elektrische Spannung des Fahrzeugs oder einen Versorgungsdruck des Druckluftbremssystems (ein Druck des Parkbremskreises und ein Druck des Betriebsbremskreises) handeln.

DE 37 40 077 A1 offenbart ein automatisches Kupplungssystem zwischen einer Fahreinheit und einem Rolfträger, welches über einen so genannten Schwanenhals realisiert wird. Um zu vermeiden, dass die pneumatischen Versorgungsleitungen und Versorgungsleitungen für eine Beleuchtung manuell angekuppelt werden müssen, sind sowohl der Schwanenhals als auch der Rollträger mit Kupplungshälften für Zu- und Abführleitungen ausgestattet. Unter mechanischer Zentrierung der beiden Kupplungshälften werden mit dem automatischen Kuppeln die zugeordneten Kupplungshälften automatisch miteinander verbunden.

Weiterer Stand der Technik ist aus WO 03/080417 A1 und DE 10 2007 008 504 A1 bekannt.

### AUFGABE DER ERFINDUNG

Der Erfindung liegt die Aufgabe zugrunde, eine Bremsanlage vorzuschlagen, welche vermeidet bei Fehlbedienungen oder unterbleibenden erforderlichen Bedienungen über eine erhöhte Betriebssicherheit verfügt. Weiterhin liegt der vorliegenden Erfindung die Aufgabe zugrunde, eine neuartige Verwendung einer derartigen Bremsanlage vorzuschlagen.

### LÖSUNG

Die Aufgabe der Erfindung wird erfindungsgemäß mit einer Bremsanlage mit den Merkmalen des Patentanspruchs 1 gelöst. Weitere Ausgestaltungen einer derartigen Bremsanlage ergeben sich gemäß den abhängigen Patentansprüchen 2 bis 8. Eine weitere Lösung der der Erfindung zugrundeliegenden Aufgabe ist gegeben durch eine pneumatische Bremsanlage mit den Merkmalen des Patentanspruchs 9. Weitere Ausgestaltungen dieser Lösung ergeben sich entsprechend den abhängigen Patentansprüchen 10 und 11. Eine weitere Lösung der der Erfindung zugrundeliegenden Aufgabe ist gegeben durch eine Bremsanlage mit den Merkmalen des Patentanspruchs 12. Weitere Ausgestaltungen einer derartigen Lösung ergeben sich gemäß den Merkmalen der abhängigen Patentansprüche 13 bis 20. Schließlich stellt eine Verwendung gemäß dem Merkmal des unabhängigen Patentanspruchs 21 eine weitere Lösung der Aufgabe der Erfindung dar.

### BESCHREIBUNG DER ERFINDUNG

Während für den Stand der Technik die Betätigungseinrichtungen der Federspeicherbremse und des Parkventils von dem Zugfahrzeug gespeist werden, aber ansonsten autark von dem Zugfahrzeug arbeiten und betätigt werden, schlägt die erste erfindungsgemäße Lösung vor, dass eine Erfassungseinrichtung vorgesehen ist, über die ein Betriebszustand der Federspeicherbremse des Anhängers oder des Parkventils erfasst werden kann. Hierbei kann der Betriebszustand unmittelbar oder mittelbar erfasst werden, was beispielsweise für die Federspeicherbremse bedeuten kann, dass ein Druck in einer Federspeicherkammer erfasst wird (unmittelbare Erfassung) oder ein Druck in einer Zuführleitung (mittelbare Erfassung) oder ein Betätigungsdruck für ein Ventil in einer Zuführleitung (mittelbare Erfassung).

Darüber hinaus liegt der erfindungsgemäßen Ausgestaltung die Erkenntnis zugrunde, dass der erfasste Betriebszustand nicht (lediglich) im Bereich des Anhängers zur Verfügung stehen muss. Vielmehr ist erfindungsgemäß eine Übertragungseinrichtung vorgesehen. Über die Übertragungseinrichtung ist der durch die Erfassungseinrichtung erfasste Betriebszustand zu einem Zugfahrzeug übertragbar. Damit liegt auch im Zugfahrzeug der Betriebszustand der Federspeicherbremse bzw. des Parkventils vor, welcher auf vielfältige Weise bearbeitet und/oder für den Fahrer angezeigt werden kann.

Für die Ausbildung der erfindungsgemäßen Übertragungseinrichtung gibt es vielfältige, beliebige Möglichkeiten: Beispielsweise kann die Übertragung eines elektrischen oder pneumatischen Signals erfolgen, wobei die Schnittstelle der Übertragungseinrichtung mit dem Zugfahrzeug räumlich benachbart zu weiteren Kopplungselementen zwischen Anhänger und Zugfahrzeug angeordnet sein kann oder sogar in weitere Kopplungselemente, also einen Kupplungskopf Vorrat und/oder eine Kupplungskopf Bremse oder eine mechanische Kopplung zur Übertragung von Zug- und Bremskräften integriert sein. Ebenfalls möglich ist, dass die Übertragungseinrichtung "drahtlos" ausgebildet ist, beispielsweise als Sender mit zugeordneter Empfangseinrichtung des Zugfahrzeugs. Es kann aber auch eine elektrische Übertragungseinrichtung, beispielsweise mit Steckverbindung oder über verbundene Bus-Systeme, genutzt werden, die lediglich für die Übertragung des Zustands der Federspeicherbremse oder zusätzlich für andere Zwecke genutzt werden kann. Weiterhin möglich ist, dass die Übertragungseinrichtung Signale nicht nur vom Anhänger zum Zugfahrzeug überträgt - vielmehr können andere Signale auch in umgehrte Richtung übertragen werden. Details zu einer Datenkommunikation für elektronische Bremsanlage sind ISO 11992 zu entnehmen.

In weiterer Ausgestaltung der erfindungsgemäßen Bremsanlage besitzt das Zugfahrzeug eine Signaleinrichtung, welche einem Fahrer signalisiert, dass die Federspeicherbremse wirksam ist und/oder die Federspeicherbremse gelöst ist. Hierbei kann die Signaleinrichtung beispielsweise ein akustisches Signal erzeugen, insbesondere einen Warnton oder ein Piepsen. Alternativ oder kumulativ möglich ist, dass die Signaleinrichtung ein optisches Signal erzeugt, beispielsweise ein Warnblinklicht oder eine Leuchte, wenn die Federspeicherbremse noch wirksam ist.

Während durchaus denkbar ist, dass die Signaleinrichtung ungeachtet der Tatsache, dass ein Fahrbetrieb bevorsteht, wirksam ist, schlägt eine weitere Ausgestaltung der Erfindung vor, dass eine Einrichtung vorgesehen ist, über die erkannt werden kann, ob ein Beginn eines Fahrbetriebs erfolgt oder unmittelbar bevorsteht. Weiterhin ist gemäß diesem Vorschlag eine Steuereinrichtung vorgesehen. Die Steuereinrichtung ist derart ausgebildet, dass diese die Signaleinrichtung nur dann aktiviert, wenn die Einrichtung zur Erkennung eines Beginns eines Fahrbetriebs indiziert, dass ein Fahrbetrieb tatsächlich oder mit erhöhter Wahrscheinlichkeit bevorsteht. Während ohne eine derartige Einrichtung ein Warnsignal auch dann erzeugt werden würde, wenn der Fahrer den Zug gar nicht in Bewegung setzen möchte, ist durch die erfindungsgemäßen Maßnahmen eine "intelligente Warneinrichtung" gebildet, die lediglich dann ein Signal erzeugt, wenn der Fahrer tatsächlich einen Fahrbetrieb aufnehmen möchte.

Durchaus möglich ist, dass auch für ein Signal der Signaleinrichtung, dass die Federspeicherbremse noch wirksam ist, der Fahrer das Fahrzeug in Bewegung setzen kann. Für eine Weiterbildung der Bremsanlage, die unter Umständen auch auf die Signaleinrichtung verzichten kann, ist eine Steuereinrichtung vorhanden, die derart ausgebildet ist, dass diese einen Fahrbeginn verhindern kann, beispielsweise dadurch, dass die Zündung nicht betätigt werden kann, kein Gang eingelegt werden kann oder ähnliches. Die Steuereinrichtung verhindert einen Fahrbeginn aber gerade dann, wenn die Erfassungseinrichtung für den Betriebszustand der Federspeicherbremse des Anhängers oder des Parkventils signalisiert, dass die Federspeicherbremse noch wirksam ist. Auf diese Weise kann die Aufnahme des Fahrbetriebs mit blockierenden Rädern des Anhängers, die eingangs erläutert worden ist, zuverlässig vermieden werden.

Für die Erfassung des Betriebszustands der Federspeicherbremse des Anhängers oder des Parkventils gibt es vielfältige beliebige Möglichkeiten. Für einen ersten besonderen Vorschlag der Erfindung ist diese Erfassungseinrichtung als Wegsensor ausgebildet, welcher einen Betätigungsweg der Federspeicherbremse erfasst, wobei der erfasste Weg beispielsweise eine Verschiebung oder eine Verdrehung eines im Zuge der Betätigung der Federspeicherbremse bewegten Bauelementes erfassen kann.

Entsprechend einem anderen Vorschlag der Erfindung ist die Erfassungseinrichtung als Drucksensor ausgebildet, welcher einen Druck in einer Federspeicherkammer der Federspeicherbremse unmittelbar erfasst oder einen Druck in einer Zuführleitung zu der Federspeicherkammer oder in dem Parkventil erfasst.

Ebenfalls möglich ist, dass die Erfassungseinrichtung als Wegsensor ausgebildet ist, welcher einen Stellweg des Parkventils, insbesondere eine Verschiebung oder eine Verschwenkung eines Ventilelements des Parkventils, erfasst.

Auch möglich ist, dass die Erfassungseinrichtung als Momentensensor ausgebildet ist, welcher ein Bremsmoment der Federspeicherbremse erfasst. Unter Umständen ist für die Durchführung einer geregelten Bremsung ohnehin ein derartiger Momentensensor vorhanden. Es versteht sich, dass ein derartiges Moment auch aus anderweitigen, in einer Regeleinrichtung vorhandenen Daten abgeleitet werden kann.

Es ist darauf hinzuweisen, dass, beispielsweise für die Ausbildung eines redundanten Systems, auch mehrere der vorgenannten Erfassungseinrichtungen kumulativ zum Einsatz kommen können.

Eine weitere Lösung der der Erfindung zugrundeliegenden Aufgabe widmet sich der Tatsache, dass für den Stand der Technik der Fahrer das Parkventil nur dann zur Änderung der Betriebsstellung betätigen kann, wenn der Fahrer auf dieses im Bereich des Anhängers zugreifen kann, sich also nicht in einer Fahrerkabine des Zugfahrzeugs befindet. Erfindungsgemäß wird vorgeschlagen, dass das mit dem Anhänger gekoppelte oder koppelbare Zugfahrzeug eine Betätigungseinrichtung besitzt, welche manuell vom Fahrer zu betätigen ist. Vorzugsweise befindet sich diese Betätigungseinrichtung in einer Fahrerkabine. Hierbei kann die Betätigungseinrichtung beliebig ausgebildet sein. Beispielsweise kann die Betätigungseinrichtung dem Parkventil nachempfunden sein, wobei die Betätigungseinrichtung auch die einzelnen Betriebsstellungen des Parkventils nachbildet und eine Veränderung einer Betriebsstellung der Betätigungseinrichtung eine Veränderung der Betriebsstellung des Parkventils nach sich zieht. Vorzugsweise kann über die Betätigungseinrichtung allerdings eine Art "Impuls" erzeugt werden, welcher zu einer Veränderung der Betriebsstellung des Parkventils führt. Hierbei kann zwischen Betätigungseinrichtung und Parkventil ein pneumatisches, elektrisches oder kabelloses Signal übertragen werden. Eine Kopplung zwischen Zugfahrzeug und Anhänger zur Übertragung eines Signals der Betätigungseinrichtung kann über einen Kupplungskopf für eine pneumatische Leitung, im Umgebungsbereich oder eine separate elektrische Kopplung oder die Herstellung der mechanischen Kopplung erfolgen. Möglich ist auch, dass die zuvor genannte Übertragungseinrichtung zur Übertragung des erfassten Betriebszustandes zu dem Zugfahrzeug multifunktional ausgebildet ist, indem in der Übertragungseinrichtung auch eine Schnittstelle vorgesehen ist, über welche ein Signal von der Betätigungseinrichtung zu dem Parkventil übertragbar ist. Verallgemeinert gesagt besitzt für die genannte erfindungsgemäße Ausgestaltung der Anhänger vorzugsweise eine geeignete Empfangeinrichtung, über welche ein beliebiges Signal der Betätigungseinrichtung in dem Zugfahrzeug zu dem Parkventil übertragbar ist.

Aus Gründen der Vereinfachung wird vorrangig die Veränderung der Betriebsstellung der Federspeicherbremse des Anhängers über eine Veränderung der Betriebsstellung des Parkventils angesprochen. Es versteht sich allerdings, dass auch eine Lösung der Federspeicherbremse möglich ist, ohne dass das Parkventil selber in seine Lösestellung verbracht wird. Beispielsweise kann hierzu zwischen Parkventil und Federspeicherbremse ein weiteres Ventil zwischengeschaltet werden, welches zum Lösen der Federspeicherbremse einen Druck zu der Federspeicherkammer der Federspeicherbremse leitet und/oder zum Betätigen der Federspeicherbremse eine Entlüftung der Federspeicherkammern vornehmen kann.

Darüber hinaus hat die Erfindung erkannt, dass ein weiterer kritischer Fahrzustand gegeben ist, wenn fälschlicherweise der Fahrer eine pneumatische Kopplung zwischen Anhänger und Zugfahrzeug herbeigeführt hat, aber vergessen hat, eine mechanische Kopplung zwischen Anhänger und Zugfahrzeug zur Übertragung von Zug- und Bremskräften herzustellen oder eine beliebige andere Kopplung nicht ordnungsgemäß ausgeführt wurde. Wird dann das Zugfahrzeug bewegt, kann sowohl für wirksame Federspeicherbremse des Anhängers als auch für gelöste Federspeicherbremse des Anhängers das Losfahren des Zugfahrzeugs zu einem Abriss der Vorratsleitung oder der Bremsleitung des Anhängers oder anderweitigen Fehlfunktionen führen. Erfindungsgemäß wird der Einsatz einer Prüfeinrichtung vorgeschlagen, welche überprüft, ob die Kopplung zwischen Anhänger und Zugfahrzeug ordnungsgemäß hergestellt worden ist. Stellt die Prüfeinrichtung fest, dass eine ordnungsgemäße Kopplung zwischen Anhänger und Zugfahrzeug nicht gegeben ist, kann in dem Zugfahrzeug ein Signal ausgelöst werden. Ebenfalls möglich ist, dass ein von dem Fahrer an der Betätigungseinrichtung ausgelöstes Signal zur Veränderung der Betriebsstellung des Parkventils oder der Federspeicherbremse für nicht ordnungsgemäße Kopplung ignoriert wird, wodurch vermieden ist, dass die Federspeicherbremse fahrerbetätigt gelöst wird, aber die Kopplung für das Losfahren des Zugfahrzeugs versagt und der Anhänger sich frei vom Zugfahrzeug und ungebremst bewegen kann. Unter einer ordnungsgemäßen Kopplung im Sinne der vorliegenden Erfindung wird eine Kopplung verstanden, bei welcher sämtliche oder ein Teil der mechanischen Kopplung, der pneumatischen Kopplung und/oder der elektrischen Kopplung vorschriftsmäßig erstellt worden sind.

Entsprechend einem weiteren Vorschlag zur Lösung der der Erfindung zugrundeliegenden Aufgabe wird der Automatisierungsgrad im Umfeld der Aufnahme des Fahrbetriebs erhöht: Für einen Beginn eines Fahrbetriebs eines mit dem Anhänger gekoppelten Zugfahrzeugs wird das Parkventil automatisch in die zweite Betriebsstellung überführt. Damit ist für die Aufnahme des Fahrbetriebs zwingend (oder in der Regel) die Federspeicherbremse gelöst, was dem gewünschten Zustand für die Aufnahme des Fahrbetriebs entspricht.

Für eine weitere erfindungsgemäße Ausgestaltung der Bremsanlage ist eine Einrichtung vorgesehen, über die ein Beginn eines Fahrbetriebs erkannt werden kann, was bedeuten soll, dass ein Fahrbetrieb tatsächlich bevorsteht oder mit erhöhter Wahrscheinlichkeit bevorsteht. Weiterhin ist für diese Ausgestaltung der Bremsanlage eine Steuereinrichtung vorgesehen, die das Parkventil über ein geeignetes Steuersignal automatisch in die zweite Betriebsstellung überführt, wenn der Beginn eines Fahrbetriebs vorliegt. Hierbei kann die Steuereinrichtung als elektrische Steuereinrichtung ausgebildet sein, welche über Magnetventile, elektrische Aktuatoren, Motoren oder ähnliches eine Betriebsstellung herbeiführt. Ebenfalls möglich ist eine pneumatische Steuereinrichtung, welche je nach vorliegenden Druckverhältnissen in der pneumatischen Bremsanlage die automatische Umschaltung vornimmt.

Eine besonders einfache automatische Umschaltung des Parkventils in die zweite Betriebsstellung kann gewährleistet sein, wenn das Parkventil eine Kolbenfläche besitzt. Die Kolbenfläche kann pneumatisch so beaufschlagt werden, dass das Parkventil aus der ersten Betriebsstellung in die zweite Betriebsstellung überführt wird. Somit muss der Kolbenfläche lediglich für das Erkennen eines Beginns eines Fahrbetriebs ein hinreichender Pneumatikdruck zugeführt werden, um den Wechsel in die zweite Betriebsstellung veranlassen zu können. Möglich ist, dass eine Steuereinrichtung ein Magnetventil derart betätigt, dass dieses eine Druckbeaufschlagung der Kolbenfläche freigibt. Hierbei kann die pneumatische Beaufschlagung der Kolbenfläche durch eine manuell von Fahrer betätigte Betätigungseinrichtung des Zugfahrzeugs ausgelöst werden.

Eine besonders einfache Ausgestaltung der Erfindung ergibt sich, wenn als Auslösekriterium für die Überführung des Parkventils in die zweite Betriebsstellung, also für die Beaufschlagung der Kolbenfläche, eine Betätigung der Betriebsbremse durch den Fahrer verwendet wird. Hierbei kann der Kolbenfläche der Druck aus der Bremsleitung oder ein hiermit korrelierender Druck zugeführt werden. Damit kann aber das Signal in der Bremsleitung multifunktional genutzt werden.

Eine erhöhte Betriebssicherheit der erfindungsgemäßen Bremsanlage kann dadurch herbeigeführt werden, dass ein Betriebsbremsdruck insbesondere in einem Behälter des Anhängers überwacht wird. Liegt der Betriebsbremsdruck unterhalb eines vorgegeben Schwellwerts, der für die Durchführung einer ordnungsgemäßen Betriebsbremsung gewährleistet ist, wird die Überführung des Parkventils in die zweite Betriebsstellung unterbunden. Dieser Ausgestaltung liegt die Erkenntnis zugrunde, dass für die Überführung des Parkventils in die zweite Betriebsstellung zumindest der Anhänger ungebremst ist. Für das Lösen der Federspeicherbremse muss aber gewährleistet werden, dass bei einem entsprechenden Wunsch des Fahrers auch eine Bremsung des Zuges oder des Anhängers über die Betriebsbremse möglich ist, was durch die Überwachung des Betriebsbremsdruckes vor der Lösung der Federspeicherbremse gewährleistet ist.

Für die Ausbildung einer Einrichtung zur Erkennung eines Beginns eines Fahrbetriebs gibt es vielfältige Möglichkeiten. Hier sollen lediglich einige Beispiele aufgelistet werden:
a) Als Indikator für das Bevorstehen eines Fahrbetriebs kann ein Signal verwendet werden, dass die Tür der Fahrerkabine des Zugfahrzeugs geöffnet wird, also ein Fahrer in die Fahrerkabine klettert, und/oder die Tür geschlossen wird.
b) Ebenfalls kann eine Sitzbewegungserkennungseinrichtung vorgesehen sein, welche ein geeignetes Signal erzeugt, wenn ein Fahrer auf dem Fahrersitz Platz nimmt, was mit hoher Wahrscheinlichkeit dafür spricht, dass nach weiteren Vorbereitungshandlungen durch den Fahrer der Fahrbetrieb aufgenommen wird.
c) Ebenfalls möglich ist, dass detektiert wird, ob (für gestartete Brennkraftmaschine) ein Gang eingelegt wird, beispielsweise durch Betätigung eines entsprechenden Schaltelements wie einem Kupplungspedal, einem Ganghebel oder ein Schaltelement in dem Getriebe selbst.
d) Ebenfalls als Indikator für den Beginn eines Fahrbetriebs kann ein entsprechender Schalter in der Fahrerkabine verwendet werden, der von dem Fahrer im Umfeld der Aufnahme des Fahrbetriebs betätigt wird.
e) Ebenfalls kann als Indikator ein beliebiges Pedal des Zugfahrzeugs verwendet werden, beispielsweise eine Betätigung eines Gaspedals.
f) Ebenfalls überwacht werden kann eine Kopplungskraft oder deren Änderung zwischen Zugfahrzeug und Anhänger. Überschreitet die Kopplungskraft oder die Änderung einen Schwellwert, indiziert dies, dass das Zugfahrzeug angetrieben wird, während sich der Anhänger noch in durch die Federspeicherbremse gebremstem Zustand befindet.
g) Ebenfalls kann eine Überwachungseinrichtung für die Geschwindigkeit des Zugfahrzeugs eingesetzt werden. Überschreitet die Geschwindigkeit des Zugfahrzeugs einen Schwellwert, kann auf die Aufnahme eines Fahrbetriebs geschlossen werden.
h) Ebenfalls kann ein sogenanntes Reset-to-Ride-Signal für ein Hebe-Senk-Ventil eines Anhängers oder Zugfahrzeugs genutzt werden, um auf den Beginn eines Fahrbetriebs zu schließen.
i) Ebenfalls genutzt werden kann das Signal eines GPS-Systems, welches mit der Erkennung einer Bewegung des Fahrzeugs auf einen Beginn des Fahrbetriebs hinweisen kann.

Von besonderer Bedeutung ist die vorliegende Erfindung bei Verwendung gemäß dem unabhängigen Patentanspruch 21, nämlich in Verbindung mit einem Kopplungssystem zwischen Anhänger und Zugfahrzeug (oder zwischen zwei Anhängern), bei welchem eine Kopplung zwischen Anhänger und Zugfahrzeug (oder zwischen den beiden Anhängern) mit einer Relativbewegung von Anhänger und Zugfahrzeug (oder zwischen den beiden Anhängern) aufeinander zu automatisch hergestellt wird, wobei sich der Fahrer im Zugfahrzeug befinden kann und das Zugfahrzeug in Richtung des Anhängers steuert. Für derartige moderne Systeme ist es gemäß dem Stand der Technik erforderlich, dass nach Herstellung der Kopplung zwischen Anhänger und Zugfahrzeug der Fahrer die Fahrerkabine verlässt und sich zu dem Anhänger bewegen muss, um das Parkventil in die zweite Betriebsstellung zu verbringen. Erfindungsgemäß kann der Fahrer die Überführung des Parkventils aus der ersten Betriebsstellung in die zweite Betriebsstellung aus der Fahrerkabine veranlassen und dann den Fahrbetrieb aufnehmen, ohne die Fahrerkabine zu verlassen. Dies kann beispielsweise auch eingesetzt werden für so genannten "überlange Gliederzüge".

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Bremsanlage für einen Anhänger gemäß dem Stand der Technik.
- **Fig. 2**: zeigt eine weitere Bremsanlage für einen Anhänger gemäß dem Stand der Technik.
- **Fig.3**: zeigt ein Anhängerbremsventil einer Bremsanlage gemäß Fig. 2 in schematischer, vergrößerter Darstellung.
- **Fig. 4**: zeigt ein Parkventil einer Anhängerbremsanlage gemäß Fig. 2 in vergrößerter schematisierter Darstellung.
- **Fig. 5**: zeigt eine weitere Bremsanlage für einen Anhänger mit einer Steuereinheit zur Herbeiführung einer geregelten Bremsung in schematischer Darstellung gemäß dem Stand der Technik.
- **Fig. 6**: zeigt stark schematisiert einen Zug mit einem Zugfahrzeug und einem mit dem Zugfahrzeug gekoppelten Anhänger mit einer erfindungsgemäßen Bremsanlage.
- **Fig. 7**: zeigt eine erfindungsgemäße Bremsanlage in stark vereinfachter Darstellung mit einem Magnetventil, über welches ein Parkventil in eine zweite Betriebsstellung überführbar ist.
- **Fig. 8**: zeigt eine weitere erfindungsgemäße Bremsanlage in schematischer Darstellung, bei welcher eine automatische Überführung des Parkventils in eine zweite Betriebsstellung bei Betätigung der Betriebsbremse erfolgt.
- **Fig. 9-11**: zeigen unterschiedliche extra lange Züge mit unterschiedlichen Zugfahrzeugen und Anhängern (auch "EuroCombi" genannt), in welchen die erfindungsgemäße Bremsanlage vorteilhaft eingesetzt werden kann.

### FIGURENBESCHREIBUNG

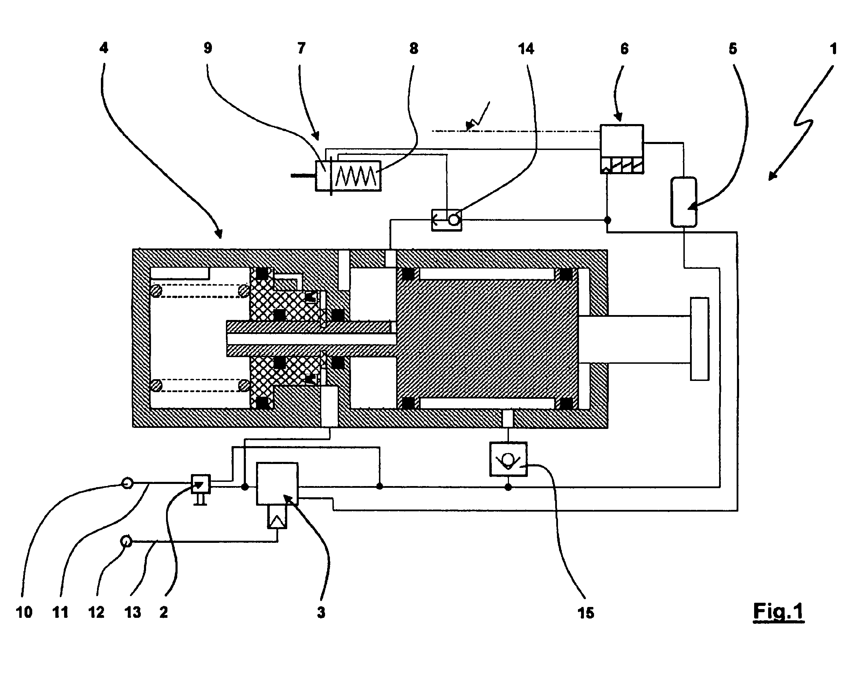

**Fig. 1** zeigt eine Bremsanlage 1 eines Anhängers, die in an sich bekannter Weise mit einem Löseventil 2, einem Anhängerbremsventil 3 oder einem Relaisventil, einem manuell betätigbaren Parkventil 4, einem Vorratsbehälter 5, einer Regeleinrichtung 6, insbesondere eine ABS-Einheit, eine EBS-Einheit und/oder eine ALB-Einheit, und einem Kombi-Bremszylinder 7 mit einer Federspeicherbreme 8 und einer Betriebsbreme 9 ausgestaltet ist. Der Bremsanlage 1 wird über einen Kupplungskopf Vorrat 10 Vorratsdruck eines Zugfahrzeugs zu einer Vorratsleitung 11 zugeführt, die über das Löseventil 2, welches manuell betätigbar ist, mit dem Vorratsbehälter 5 verbunden ist. Über einen Kupplungskopf Bremse 12 erfolgt eine Übergabe eines Bremssteuerdruckes von dem Zugfahrzeug zu einer Bremssteuerleitung 13, die mit einem Steueranschluss des Anhängerbremsventils 3 verbunden ist. Unter Einsatz eines Wechselventils 14 sowie eines Rückschlagventils 15 sind die genannten pneumatischen Bauelemente wie in Fig. 1 dargestellt in an sich bekannter Weise pneumatisch miteinander verbunden.

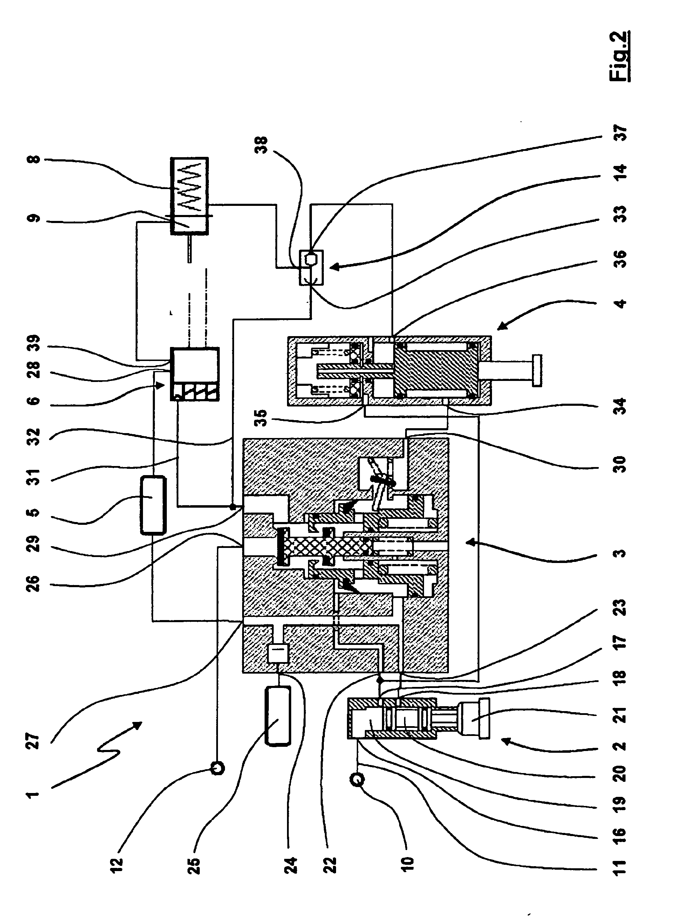

**Fig. 2** zeigt schematisch eine Bremsanlage 1 in erhöhtem Detaillierungsgrad. Das Löseventil 2 besitzt einen Anschluss 16, der mit der Vorratsleitung 11 verbunden ist, sowie zwei Anschlüsse 17, 18. Das Löseventil 2 besitzt zwei Stellungen: In der in Fig. 2 dargestellten ersten Stellung ist der Anschluss 16 mit dem Anschluss 17 verbunden, während der Anschluss 18 gesperrt ist. In einer zweiten Stellung ist die Verbindung zwischen Anschluss 16 und den Anschlüssen 17, 18 gesperrt, während die Anschlüsse 17, 18 miteinander verbunden sind. Hierzu besitzt das Löseventil 2 einen mit dem Druck der Vorratsleitung 11 beaufschlagten Druckraum 19. Der Druckraum 19 ist begrenzt durch eine Stirnseite eines Steuerschiebers 20. Der Steuerschieber besitzt zwei Steuerkanten mit einem dazwischen angeordneten Ringraum. In der ersten Stellung des Löseventils 2 sperrt die dem Druckraum 19 zugewandte Steuerkante die Verbindung zwischen den Anschlüssen 17, 18, während diese Steuerkante in der zweiten Stellung die Verbindung zwischen Anschluss 16 und den Anschlüssen 17, 18 sperrt, während der Ringraum eine Verbindung zwischen den Anschlüssen 17, 18 schafft. Für eine Druckbeaufschlagung der Vorratsleitung 11 befindet sich das Löseventil 2 infolge der auf die Stirnfläche des Steuerschiebers 20 einwirkenden Drucks der Vorratsleitung in der in Fig. 2 dargestellten ersten Stellung, während ohne Druck in der Vorratsleitung 11 die erste und zweite Stellung des Löseventils 2 stabil sind und die Stellung des Löseventils 2 manuell durch Einwirken auf ein Betätigungsorgan 21 veränderbar ist. Eine Verschiebung des Steuerschiebers 20 infolge des Drucks in der Vorratsleitung 11 ist durch einen Anschlag in der ersten Stellung begrenzt.

Das Anhängerbremsventil 3 verfügt über einen Anschluss 22, welcher mit dem Anschluss 17 verbunden ist, sowie einen Anschluss 23, der mit dem Anschluss 18 verbunden ist. Weiterhin besitzt das Anhängerbremsventil 3 einen Anschluss 24, der mit einem dem Kupplungskopf zugeordneten Behälter 25 für einen Nebenverbraucher verbunden ist. Ein Anschluss 26 des Anhängerbremsventils 3 ist mit der Bremssteuerleitung 13 verbunden. Ein weiterer Anschluss 27 ist über den Vorratsbehälter 5 mit einem Anschluss 28 der Regeleinrichtung 6 verbunden. Weiterhin weist das Anhängerbremsventil 3 einen Anschluss 29 sowie einen Anschluss 30 auf. Der Anschluss 29 ist mit einer Steuerleitung 31 für die Regeleinrichtung 6 verbunden, von der eine Leitung 32 abzweigt, die mit einem zweiten Eingang 33 des Wechselventils 14 verbunden ist. Der Anschluss 30 ist mit einem Anschluss 34 des Parkventils 4 verbunden. Der Anschluss 17 des Löseventils 2 ist mit einem weiteren Anschluss 35 des Parkventils 4 verbunden. Ein Anschluss 36 ist mit einem ersten Eingang 37 des Wechselventils 14 verbunden. Ein Ausgang 38 des Wechselventils 14 ist mit der Federspeicherbremse 8 verbunden. Die Regeleinrichtung 6 besitzt einen Anschluss 39, der mit der Betriebsbremse 9 verbunden ist und welchen die Regeleinrichtung 6 mit einem ausgeregelten Druck des Vorratsbehälters 5 beaufschlagt, der von dem Druck in der Steuerleitung 31 und von einer ABS-, EBS- und/oder ALB-Funktion abhängig ist.

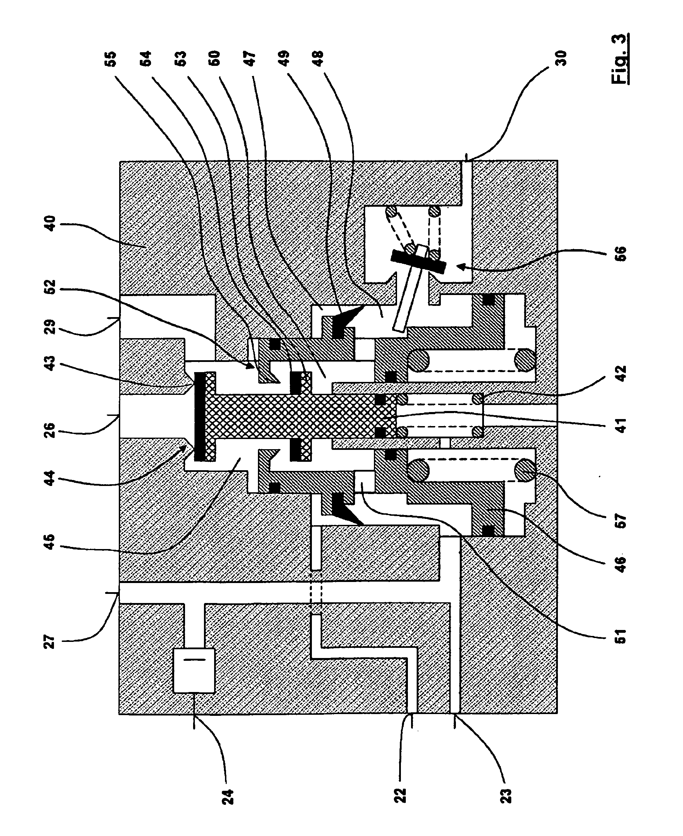

In **Fig. 3** ist ein Anhängerbremsventil 3 in größerem Detail dargestellt. In einem Gehäuse 40 ist ein Steuerelement 41 verschieblich geführt und über eine Feder 42 in der in Fig. 3 dargestellten Stellung gegen einen Ventilsitz 43 des Gehäuses 40 unter Abdichtung gepresst. Hiermit ist ein Ventil 44 geschaffen, welches in der dargestellten Schließstellung die Anschlüsse 26, 29 voneinander trennt, während in einer Öffnungsstellung, in welcher die Feder 42 in höherem Maße beaufschlagt ist, über das Ventil 44 eine Verbindung zwischen den Anschlüssen 26, 29 geschaffen ist. In einer Ausnehmung 45 des Gehäuses 40, in welcher auch das Steuerelement 41 angeordnet ist, ist in einer abgestuften Bohrung ein abgestufter Kolben 46 angeordnet. Zwischen einer Mantelfläche des Kolbens 46 und einer Bohrung des Gehäuses sind Ringkammern 47, 48 gebildet, die über ein Rückschlagventil 49 voneinander getrennt sind. Das Rückschlagventil 49 ermöglicht ein Überströmen von der Ringkammer 47 zu der Ringkammer 48, während eine umgekehrte Strömung durch das Rückschlagventil unterbunden ist. Für das dargestellte Ausführungsbeispiel ist das Rückschlagventil 49 mit einer Rückschlaglippe ausgebildet. Die Ringkammer 47 ist mit dem Anschluss 22 verbunden, so dass auf die Ringkammer 47 für vorhandenen Druck in der Vorratsleitung 11 dieser Druck wirkt. Die Ringkammer 48 ist mit den Anschlüssen 23, 27 verbunden. Für vorhandenen Druck in der Vorratsleitung 11 strömt Druckluft aus der Vorratsleitung 11 über den Anschluss 22, die Ringkammer 47, das Rückschlagventil 49, die Ringkammer 48 und den Anschluss 27 zu dem Behälter 5, so dass ein Befüllung des Vorratsbehälters 5 über das Anhängerbremsventil 3 ermöglicht ist. Befindet sich hingegen das Löseventil 2 in seiner zweiten Stellung, also nicht in der in Fig. 2 dargestellten Stellung, sind die Ringkammern 47, 48 über das Löseventil miteinander verbunden.

Innenliegend von dem Kolben 46 ist eine innere Kammer 50 gebildet, die über eine Bohrung 51 mit der Ringkammer 48 ständig verbunden ist. Weiterhin bilden das Steuerelement 41 und der Kolben 46 ein Ventil 52, welches in geöffnetem Zustand eine Verbindung zwischen der Kammer 50 über die Ausnehmung 45 zu dem Anschluss 29 schafft. Zur Bildung des Ventils 52 besitzt das Steuerelement 41 einen umlaufenden Bund 53, der einen Ventilsitz 54 bildet. Der Kolben 46 bildet in seinem Endbereich einen Ventilkörper 55, der in geschlossenem Zustand des Ventils 52 unter Abdichtung zur Anlage an den Ventilsitz 54 kommt. Während das Ventil 44 mit Bewegung des Steuerelementes 41 nach unten geöffnet wird, führt eine Relativbewegung des Steuerelementes 41 gegenüber dem Kolben 46 nach unten zu einer Öffnung des Ventils 52. Der Ringraum 48 ist über ein Rückschlagventil 56 mit dem Anschluss 30 verbunden. In seiner Funktion als Rückschlagventil öffnet dieses für ein Überströmen von der Ringkammer 48 zu dem Anschluss 30. Alternativ oder zusätzlich kann das Rückschlagventil 56 u. U. auch für eine umgekehrte Strömung oder unterhalb eines etwaigen Öffnungsdrucks des Rückschlagventils bewegungsgesteuert geöffnet werden. Mit einer Verschiebung des Kolbens 46 nach oben kommt ein Vorsprung der Mantelfläche des Kolbens zur Anlage an einen Fortsatz des Rückschlagventils 56 und verkippt mit weiterer Verschiebung des Kolbens 46 das Rückschlagventil 56, so dass dieses eine Öffnungsstellung einnehmen kann. Der Kolben 46 ist über eine Feder 57 abgestützt, welche den Kolben 46 in Richtung einer Öffnungsstellung des Ventils 52 beaufschlagt.

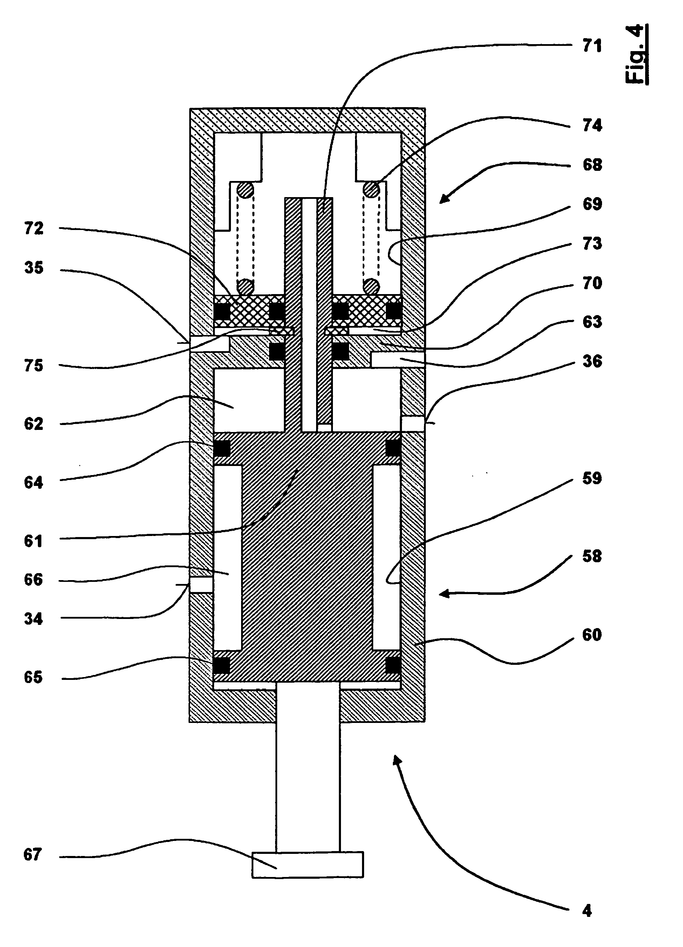

Das Parkventil 4 ist in größerem Detail in **Fig. 4** dargestellt. Das Parkventil 4 verfügt über eine Steuereinheit 58. Die Steuereinheit ist mit einer Bohrung 59 eines Gehäuses 60 gebildet, in welche die Anschlüsse 34, 36 axial voneinander beabstandet einmünden. In der Bohrung 59 ist axial verschieblich ein Ventilelement 61 geführt, welches zwischen einer Stirnseite und dem Gehäuse 60 eine Entlüftungskammer 62 bildet, die in ständiger Verbindung mit einer Entlüftung 63 steht. Das Ventilelement 61 besitzt axial voneinander beabstandete, gegenüber der Bohrung 59 abgedichtete Steuerkanten 64, 65, zwischen denen zwischen Ventilelement 61 und Gehäuse 60 eine hohlzylinderförmige Ringkammer 66 ausgebildet ist. In einer oberen ersten Stellung der Steuereinheit sind über die Ringkammer 66 die Anschlüsse 34, 36 miteinander verbunden, während mit einer Bewegung des Ventilelementes 61 nach unten in die in Fig. 4 dargestellte Stellung die Steuerkante 64 dem Anschluss 36 überfährt, so dass in der skizzierten zweiten Stellung, die hier auch als "Entlüftungsstellung" bezeichnet ist, die Anschlüsse 34, 36 über die Steuerkante 64 voneinander getrennt sind. In dieser Stellung mündet der Anschluss 36 in die Entlüftungskammer 62, so dass eine Entlüftung von Anschluss 36 ermöglicht ist. Das Ventilelement 61 ist starr mit einem Betätigungsorgan 67 gekoppelt, über welches manuell eine Betätigung des Parkventils 4 ermöglicht ist.

Darüber hinaus besitzt das Parkventil eine automatische Betätigungseinheit 68. Die Betätigungseinheit 68 weist eine Bohrung 69 auf, wobei die Bohrungen 59, 69 fluchtend zueinander hintereinander liegend angeordnet sind und durch eine Trennwand 70 voneinander getrennt sind. Das Ventilelement 61 besitzt einen starr mit diesem gekoppelten stabförmigen oder wellenartigen Fortsatz 71, welcher sich unter Abdichtung durch die Trennwand 70 in die Ausnehmung oder Bohrung 69 erstreckt. In der Bohrung 69 ist verschieblich ein Kolben 72 mit kreisringförmiger Kolbenfläche geführt, wobei der Kolben 72 radial innen liegend gegenüber dem Fortsatz 71 sowie radial außen liegend gegenüber der Bohrung 69 jeweils abgedichtet und verschieblich gelagert ist. Von der Kolbenfläche des Kolbens 72, der Bohrung 69, der Mantelfläche des Fortsatzes 71 und der Stirnwand 70 begrenzt ist eine Betätigungskammer 73, die mit dem Anschluss 35 verbunden ist und der der Druck der Vorratsleitung 11 zugeführt ist. Der Kolben 72 ist auf der der Betätigungskammer 73 gegenüberliegenden Seite gegenüber dem Gehäuse über eine Druckkräfte aufnehmende Feder 74 abgestützt, welche den Kolben 72 für drucklose Betätigungskammer 73 in die in Fig. 4 skizzierte Stellung bringen kann. Für die Beaufschlagung der Betätigungskammer 73 mit dem Druck der Vorratsleitung 11 wird der Kolben 72 aus der in Fig. 4 dargestellten Stellung unter Beaufschlagung der Betätigungsfeder 74 nach oben bewegt. Infolge des Freiheitsgrades des Kolbens 72 gegenüber dem Fortsatz 71 ist durch diese Bewegung die Stellung des Ventilelementes 61 nicht zwingend verändert. Allerdings kann das Ventilelement 61 auf eine manuelle Betätigung des Betätigungsorgans 67 dieser Bewegung folgen. Der Fortsatz 71 besitzt einen Absatz, der für das in Fig. 4 dargestellte Ausführungsbeispiel mit einem Sicherungsring 75 gebildet ist. Für nach oben bewegten Kolben 72 und betätigtes Betätigungsorgan 67, also für das Ventilelement 61 in der ersten Stellung, liegt der Sicherungsring 75 an dem Kolben 72 an. Ein Abfall des Druckes in der Vorratsleitung 11 hat zur Folge, dass die Betätigungsfeder 74 den Kolben unter Verringerung des Volumens der Betätigungskammer 73 nach unten bewegt. Für diese Bewegung nimmt der Kolben 72 infolge der Anlage desselben an dem Sicherungsring 75 den Fortsatz und das Ventilelement 61 mit, so dass mit dem Abfall des Drucks in der Vorratsleitung 11 automatisiert das Parkventil 4 von der ersten Stellung in die in Fig. 4 dargestellte zweite Stellung verbracht wird.

Für das in Fig. 1 dargestellte abgewandelte Ausführungsbeispiel des Parkventils 4 ist der Kolben 72 als gestufter Kolben ausgebildet, so dass je nach Stellung des Kolbens 72 unterschiedlich große Kolbenflächen zum Einsatz kommen, wodurch die Bewegungscharakteristik des Kolbens 72 in Abhängigkeit des Druckes und der Befüllung der Betätigungskammer 73 beeinflusst werden kann.

Die Funktionsweise der Bremsanlage 1 gemäß Fig. 2-4 ist wie folgt:

Wird der Anhänger mit dem Zugfahrzeug über den Kupplungskopf Vorrat 10 gekoppelt, wirkt der Druck der Vorratsleitung 11 auf die Stirnfläche des Steuerschiebers 20 und bringt diesen in die in Fig. 2 dargestellte erste Stellung. Es erfolgt eine Befüllung des Vorratsbehälters 5 über den Kupplungskopfvorrat 10, Vorratsleitung11, Druckraum 19, Anschluss 17, Anschluss 22, Ringkammer 47, Rückschlagventil 49, Ringkammer 48, Anschluss 27. Infolge eines Einwirkens des steigenden Drucks auf die der Feder 57 gegenüberliegende Kolbenfläche des Kolbens 46 wird mit einer zunehmenden Befüllung des Vorratsbehälters 5 der Kolben 46 unter Beaufschlagung der Feder 57 nach unten gedrückt. Dies hat ein Schließen des Ventils 52 zur Folge. Weiterhin nimmt der Kolben 46 mit zunehmender Bewegung des Kolbens 46 für geschlossenes Ventil 52 auch das Steuerelement 41 mit nach unten, was ein Öffnen des Ventils 44 zur Folge hat. Während sich das Parkventil für den Beginn des Kupplungsvorganges in der zweiten Stellung gemäß Figuren 2 und 4 befindet, führt das Ansteigen des Druckes an dem Anschluss 17 - und damit an dem Anschluss 35 - zu einer Druckbeaufschlagung der Betätigungskammer 73, die den Kolben 72 nach oben schiebt, ohne dass sich die Stellung des Ventilelementes 61 verändert. Die Ringkammer 66 ist hierbei mit dem Druck der Vorratsleitung 11 beaufschlagt, wobei hierdurch keine Kraft auf das Ventilelement 61 ausgeübt wird. Ohne manuelle Betätigung des Betätigungsorgans 67 ist somit der Anschluss 36 entlüftet, was (ohne Belüftung des zweiten Eingangs 33 des Wechselventils 14) die Entlüftung der Federspeicherbremse 8 zur Folge hat. Wird hingegen das Parkventil 4 manuell betätigt in die erste Stellung, wird die Federspeicherbremse 8 über das Wechselventil 14, den ersten Eingang 37, Anschluss 36, Ringkammer 66, Anschluss 34, Anschluss 30, Rückschlagventil 56, Ringkammer 48, Rückschlagventil 49, Ringkammer 47, Anschluss 22, Anschluss 17, Druckraum 19 auf dem Niveau des Drucks der Vorratsleitung 11 gehalten, so dass mit Druckbeaufschlagung der Federspeicherbremse die Federspeicherbremse gelöst werden kann. Mit ordnungsgemäßem Druck in der Vorratsleitung 11 befindet sich das Ventil 44 in seiner Öffnungsstellung, so dass der Bremssteuerdruck der Bremssteuerleitung 13 über den Anschluss 26, das Ventil 44 und den Anschluss 29 über die Steuerleitung 31 der Regeleinrichtung 6 zugeführt werden kann, so dass gezielt eine geregelte Bremsung über die Betriebsbremse 9 erfolgen kann.

Erfolgt ein Entkoppeln von dem Zugfahrzeug für aufgeladene Bremsanlage 1, schließt zunächst das Ventil 44, während das Ventil 52 automatisch in seine Öffnungsstellung geht. Bei geeigneter Beaufschlagung eines Ventilelementes 76, welches auch als Überströmventil wirken kann, kann dann in einer Notbremssituation für einen Bremsvorgang der Druck des Behälters 5 genutzt werden, um über die Ringkammer 48, Bohrung 51, Kammer 50, Ventil 52 und Anschluss 29 sowie Steuerleitung 31 einen Bremsvorgang zu bewirken. Für ausreichenden Druck in der Steuerleitung 31 gelangt dieser über das Wechselventil 14 in die Federspeicherbremse 8, so dass die Federspeicherbremse belüftet ist, obwohl das Parkventil 4 infolge des Einbruchs des Druckes in der Vorratsleitung 11 in der in Fig. 2 dargestellten Entlüftungsstellung ist, während eine Bremsung durch die Regeleinrichtung 6 über die Betriebsbremse 9 verursacht wird.

Für ein erneutes Ankoppeln an das Zugfahrzeug kehrt der Kolben 46 wieder in seine untere Stellung zurück. Das Ventil 44 öffnet, was ohne Bremssteuerdruck zur Folge hat, dass die Betriebsbremse 9 entlüftet wird, während das Ventil 52 geschlossen wird. Der Druck in der Vorratsleitung 11 führt dazu, dass der Kolben 72 der Betätigungseinheit 68 in die obere Stellung überführt wird. Dennoch bleibt die Federspeicherbremse 8 weiter über das Parkventil 4 entlüftet, so dass für ein Lösen der Federspeicherbremse die manuelle Betätigung des Parkventils 4 erforderlich ist.

Zusammenfassend ist festzustellen, dass einerseits über die Betätigungseinheit 68 zuverlässig automatisiert dafür Sorge getragen ist, dass sich bei einem Abfall oder Einbruch des Druckes in der Vorratsleitung 11, beispielsweise durch einen Abriss der Vorratsleitung oder eine Leckage, das Parkventil 4 in der in den Fig. 2 und 4 dargestellten Entlüftungsstellung befindet. Während dies in einer echten Parksituation vorteilhaft ist und zu der Entlüftung der Federspeicherbremse 8 führt zwecks Einlegung der Feststell- oder Parkbremse, wird diese Funktion gemäß Fig. 2 in einer echten Notbremssituation dadurch verändert, dass in der Notbremssituation der Druck in der Steuerleitung 31, welcher dem Behälter 25 entstammen kann, über das Wechselventil 14 der Federspeicherbremse 8 zugeführt wird, wobei dieser Druck ausreichend ist, um die Federspeicherbremse vollständig zu lösen. Somit erfolgt eine ausschließliche Regelung der Bremskraft über die Betriebsbremse 9 durch eine Vorgabe des Druckes über die Regeleinrichtung 6 unter Berücksichtigung
- des Drucks in der Steuerleitung 31,
- der Traktion über ein ABS-/EBS-System und/oder
- eines ALB-Systems.

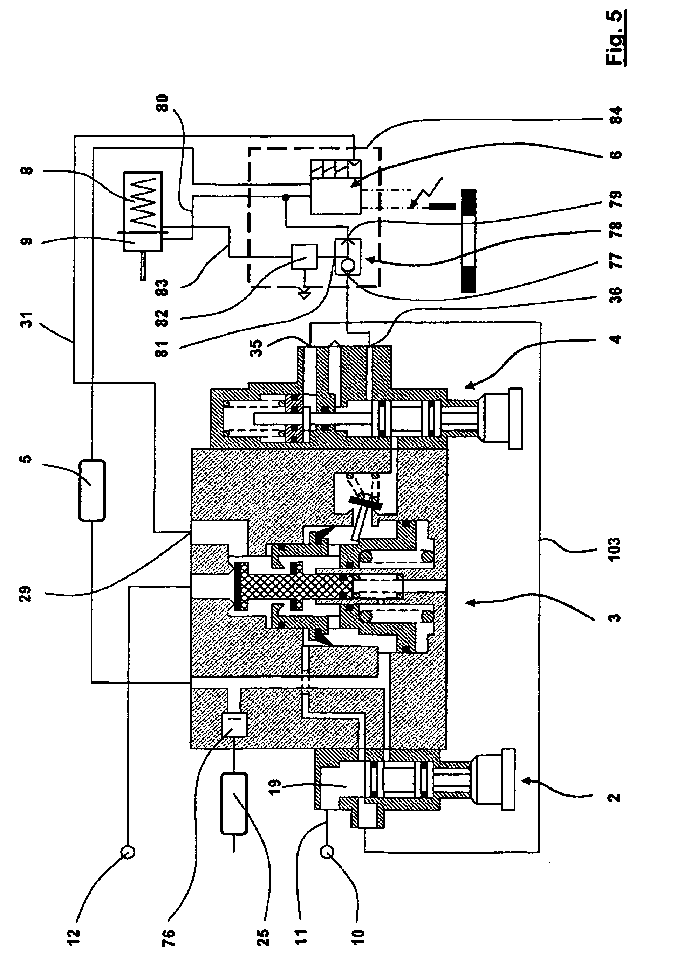

Anders stellt sich bei ansonsten Fig. 2 entsprechender Ausgestaltung die Situation für die Bremsanlage 1 gemäß **Fig. 5** dar. In dieser ist ebenfalls der Anschluss 29 über die Steuerleitung 31 mit einem Steueranschluss der Regeleinrichtung 6 verbunden. Der Anschluss 36 ist mit einem ersten Eingang 77 eines Wechselventils 78 verbunden, dessen zweiter Eingang 79 mit der von der Regeleinrichtung 6 zu der Betriebsbremse 9 führenden Betriebsbremsleitung 80 verbunden ist. Ein Ausgang 81 des Wechselventils 78 ist, hier über ein Schnelllöseventil 82, mit einer Feststellbremsleitung 83 mit der Federspeicherbremse 8 verbunden. Der Regeleinrichtung 6 wird das elektrische Signal eines Raddrehzahlsensors und/oder eines Niveausensors zugeführt.

Für das in Fig. 5 dargestellte Ausführungsbeispiel führt eine Notbremssituation dazu, dass das Parkventil 4 in seine Entlüftungsstellung überführt wird. Zur Durchführung eines geregelten Bremsvorganges wird die Regeleinrichtung 6 aus dem Behälter 5 über den Anschluss 29 mit einem Steuerdruck beaufschlagt, wobei die Regeleinrichtung einen je nach Traktion und Beladung ausgesteuerten Druck in der Betriebsbremsleitung 80 erzeugt. Dieser Druck wird über das Wechselventil 78 und das Schnelllöseventil 82 der Federspeicherbremse 8 zugeführt. Ist dieser Druck bei entsprechender Traktion und/oder Beladung des Anhängers kleiner als der Lösedruck der Federspeicherbremse, tritt eine Federspeicherbremswirkung zu der eigentlich gewünschten Bremswirkung der Betriebsbremse hinzu, wodurch ein Regelfehler der Regeleinrichtung erzeugt wird. Während diese Probleme beseitigt würden durch eine Zuführung des Bremssteuerdruckes in der Steuerleitung 31 zu dem zweiten Eingang 79 des Wechselventils 78 anstelle des ausgeregelten Betriebsbremsdruckes in der Betriebsbremsleitung 80, soll aus Gründen einer Bauteilvereinheitlichung für unterschiedliche Anwendungen unter Umständen dennoch eine Baueinheit 84 eingesetzt werden, die mit der Regeleinrichtung 6 und dem Wechselventil 78 gebildet ist und unter Umständen mit einem zusätzlichen Schnelllöseventil 82 und/oder anderen pneumatischen Bauelementen. Die Baueinheit 84 besitzt einen Anschluss für die Verbindung mit dem Parkventil 4, einen Anschluss für eine Verbindung mit der Feststellbremsleitung 83, einen Anschluss für eine Verbindung mit der Betriebsbremsleitung 80, einen Anschluss für eine Verbindung mit dem Vorratsbehälter 5 sowie einen Anschluss für eine Verbindung mit der Steuerleitung 31. Weitere elektrische Anschlüsse sind zur Anbindung der Regeleinrichtung 6 an weitere Steuereinheiten, zur Zuführung von Messsignalen und zur Ausgabe von Steuersignalen für außerhalb der Baueinheit 84 angeordnete elektrische oder elektropneumatische Bauelemente und/oder an ein Bussystem vorhanden.

Weitere Ausführungsbeispiele für eine Bremsanlage eines Anhängers, welche grundsätzlich unter Ergänzung der im Folgenden beschriebenen Merkmale im Rahmen der Erfindung einsetzbar sind, sind insbesondere den nicht vorveröffentlichten Patentanmeldungen DE 10 2007 053 765 und DE 10 2007 053 764 der Anmelderin zu entnehmen.

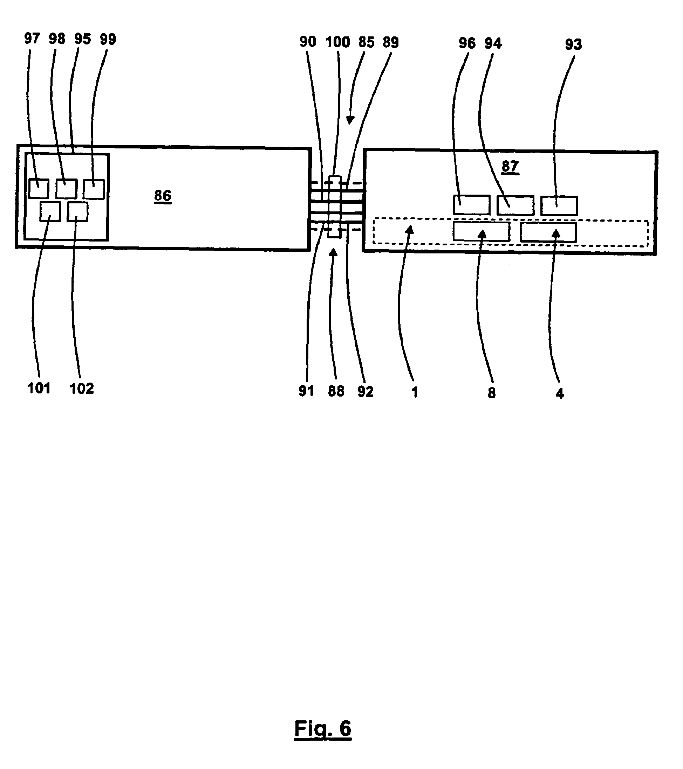

**Fig. 6** zeigt stark schematisiert einen Zug 85, welcher mit einem Zugfahrzeug 86 und einem Anhänger 87 gebildet ist. Zugfahrzeug 86 und Anhänger 87 sind über eine Kopplung 88 miteinander gekoppelt. Beispielsweise ist die Kopplung 88 mit
- einer pneumatischen Kopplung, nämlich einer Kopplung 89 für die Vorratsleitung mit einem Kupplungskopf Vorrat 10 sowie einer Kopplung 90 für die Bremsleitung mit dem Kupplungskopf Bremse 12,
- einer mechanischen Kopplung 91, über die Führungskräfte, Zug- oder Bremskräfte zwischen Zugfahrzeug 86 und Anhänger 87 übertragbar sind, und/oder
- einer elektrischen Kopplung 92 zur Übertragung von elektrischen Signalen zwischen Zugfahrzeug 86 und Anhänger 87 in eine oder beide Richtungen,
gebildet. Die Kopplungen 89, 90, 91, 92 können mit einem integralen Kopplungselement ausgebildet sein oder einzeln ausgebildet sein. Für die Herstellung der Kopplungen 89-92 ist es möglich, dass der Fahrer das Zugfahrzeug 86 geeignet relativ zu dem Anhänger 87 positioniert und dann die Kopplungen 89-92 einzeln oder gemeinsam herstellt. Möglich ist allerdings auch, dass die Kopplung 88 automatisch gebildet wird, wenn der Fahrer das Zugfahrzeug 86 bei mehr oder weniger genauer Ausrichtung an den Anhänger 87 annähert, wobei Führ- oder Einfädeleinrichtungen eingesetzt werden können, um die Toleranz für die positionsgenaue Annäherung des Zugfahrzeugs 86 relativ zum Anhänger 87 zu erhöhen.

Unter der erfindungsgemäßen Bremsanlage wird wahlweise eine Bremsanlage 1 verstanden, welche lediglich dem Anhänger dient, oder eine Gesamt-Bremsanlage für das Zugfahrzeug 86 und den Anhänger 87.

In Fig. 6 ist die Bremsanlage 1 des Anhängers 87 mit dem Parkventil 4 und der Federspeicherbremse 8 lediglich schematisch dargestellt. In dem Anhänger ist eine Erfassungseinrichtung 93 vorgesehen. Die Erfassungseinrichtung 93 erfasst einen Betriebszustand des Parkventils 4 und/oder der Federspeicherbremse 8, also erfasst unmittelbar oder mittelbar, ob die Federspeicherbremse 8 aktiviert ist, also die Feststellbremse wirksam ist (erster Betriebszustand), oder die Federspeicherbremse 8 gelöst ist, also die Feststellbremse nicht wirksam ist (zweiter Betriebszustand). Um lediglich einige Beispiele zu nennen, kann die Erfassungseinrichtung 93 einen Stellweg des Ventilelements 61 in dem Parkventil 4 erfassen oder einen Ausgangsdruck an dem Anschluss 36 oder einer hiermit verbundenen Leitung oder in der Federspeicherbremse 8 selbst oder in einer zugeordneten Kammer des Parkventils 4 erfassen. Die Erfassungseinrichtung 93 kann an beliebiger Stelle des Anhängers 87 angeordnet sein und beispielsweise in das Parkventil 4, eine Leitung zwischen Parkventil 4 und Federspeicherbremse 8 und die Federspeicherbremse 8 selbst integriert sein.

Weiterhin besitzt der Anhänger 87 eine Übertragungseinrichtung 94, über welche ein Signal der Erfassungseinrichtung 93, welches eine Information über den wirksamen Betriebszustand der Federspeicherbremse 8 enthält, an den Fahrer des Nutzfahrzeugs, das Zugfahrzeug 86 und insbesondere in eine Fahrerkabine 95 des Zugfahrzeugs 86 übermittelt werden kann. Die Übertragungseinrichtung 94 kann als Funk-Übertragungseinrichtung ausgebildet sein oder Signale zu dem Zugfahrzeug 86 und der Fahrerkabine 95 über die Kopplung 88, insbesondere über die elektrische Kopplung 92, übertragen, wobei auch eine Übertragung über ein CAN von Anhänger 87 und/oder Zugfahrzeug 86 erfolgen kann.

Weiterhin kann in den Anhänger 87 eine Steuereinrichtung 96 integriert sein. Mittels der Steuereinrichtung 96 kann für den Fall, dass eine Aufnahme eines Fahrbetriebs des Zugs 85 erfolgt, bevorsteht oder mit einer hohen Wahrscheinlichkeit erfolgt, ein Wechsel des Betriebszustands der Federspeicherbremse 8 von dem ersten Betriebszustand in den zweiten Betriebszustand herbeigeführt werden. Hierzu wirkt die Steuereinrichtung 96 mit geeigneten Bestandteilen der Bremsanlage 1 zusammen. Beispielsweise kann die Steuereinrichtung 96 Magnetventile ansteuern, über welche die Druckverhältnisse der Federspeicherbremse 8 unmittelbar verändert werden können, also insbesondere ein Magnetventil mit einer Öffnungsstellung, in welcher die Federspeicherbremse 8 mit Druck beaufschlagt wird zum Lösen der Federspeicherbremse, sowie einer Entlüftungsstellung des Magnetventils, in welcher die Federspeicherbremse 8 entlüftet wird. Alternativ ist es auch möglich, dass die Steuereinrichtung 96 einen Aktuator ansteuert, über welchen das Parkventil von einer Parkstellung in eine Lösestellung überführt werden kann. Wie im Folgenden noch beispielhaft erläutert wird, kann die Steuereinrichtung 96 auch ein Magnetventil ansteuern, welches pneumatisch eine Kolbenfläche des Parkventils 4 derart beaufschlagt, dass das Parkventil automatisiert von der Parkstellung (erste Betriebsstellung) in die Lösestellung (zweite Betriebsstellung) überführt wird. Die Steuereinrichtung 96 kann separat ausgebildet sein lediglich für den zuvor erläuterten Zweck. Ebenfalls möglich ist, dass die Steuereinrichtung 96 als integrale Steuereinrichtung für mehrere Zwecke dient, wobei die Steuereinrichtung 96 beispielsweise auch von der Regeleinrichtung 6 ausgebildet sein kann.

In der Fahrerkabine 95 des Zugfahrzeugs 86 ist für den Fahrer sichtbar, beispielsweise im Kombi-Instrument, eine Signaleinrichtung 97 angeordnet, über welche dem Fahrer signalisiert werden kann, ob der erste Betriebszustand der Federspeicherbremse 8 oder des Parkventils 4 und/oder der zweite Betriebszustand vorliegt. Hierbei kann die Signaleinrichtung 97 diese Information in beliebiger Weise bereitstellen, insbesondere optisch in Form einer Warnleuchte, einer digitalen Anzeige oder ähnliches, akustisch, insbesondere durch einen durchgehenden Ton oder einen intermittierenden Warnton, über Vibrationen eines Bedienteiles oder des Sitzes, um nur lediglich einige Beispiele zu nennen.

Optional kann in der Fahrerkabine 95 eine Betätigungseinrichtung 98 angeordnet sein, bei welcher es sich um einen Schalter, einen Schieber, einen Sensor oder ähnliches handeln kann. Die Betätigungseinrichtung 98 dient der manuellen Herbeiführung eines Wechsels der Betriebsstellung von Federspeicherbremse 8 und/oder Parkventil 4 durch den Fahrer.

Weiterhin kann in der Fahrerkabine 95 eine Steuereinrichtung 99 angeordnet sein. Diese dient zunächst dem Empfang von Signalen bezüglich des Betriebszustands, die der Übertragungseinrichtung 94 entstammen. In der Steuereinrichtung 99 kann eine weitere Aufbereitung dieses Signals erfolgen, wozu die Steuereinrichtung 99 auch weitere Betriebsparameter berücksichtigen kann. Darüber hinaus kann die Steuereinrichtung 99 der geeigneten Ansteuerung der Signaleinrichtung 97 dienen und/oder ein Signal von der Betätigungseinrichtung 98 erhalten und dieses in geeigneter Form, beispielsweise über die Kopplung 88, an die Steuereinrichtung 96 des Anhängers 87 übertragen, wo dann durch die Steuereinrichtung 96 eine Veränderung des Betriebszustands des Parkventils 4 und der Federspeicherbremse 8 herbeigeführt werden kann. Möglich ist, dass in der Steuereinrichtung 99 eine Bewertung des Signals der Betätigungseinrichtung 98 dahingehend erfolgt, ob trotz eines explizit über die Betätigungseinrichtung 98 übergebenen Wunsches des Fahrers tatsächlich ein Wechsel des Betriebszustandes von Parkventil 4 und Federspeicherbremse 8 möglich ist. Signalisiert beispielsweise eine Prüfeinrichtung 100 im Bereich der Kopplung 88, dass die Kopplung 88 fehlerhaft oder unvollständig montiert ist, kann die Steuereinrichtung 99 das Lösen der Federspeicherbremse 8 verhindern, indem für eine derartige Nebenbedingung das geeignete Steuersignal nicht an den Anhänger 87 übermittelt wird.

Weiterhin kann in der Fahrerkabine 95 - oder an anderer Stelle des Zugfahrzeugs 86 - eine Sende- und/oder Empfangseinrichtung 101 vorhanden sein, über welche eine ein- oder zweiseitige Kommunikation zwischen Zugfahrzeug 86 und Anhänger 87 ermöglicht wird.

In der Fahrerkabine 95 - oder an anderer Stelle in dem Zugfahrzeug 86 - ist eine Fahrbeginn-Erkennungseinrichtung 102 angeordnet, über welche ein bevorstehender Beginn eines Fahrbetriebs, ein tatsächlich erfolgender Beginn des Fahrbetriebs oder eine erhöhte Wahrscheinlichkeit einer Aufnahme eines Fahrbetriebs detektiert wird.

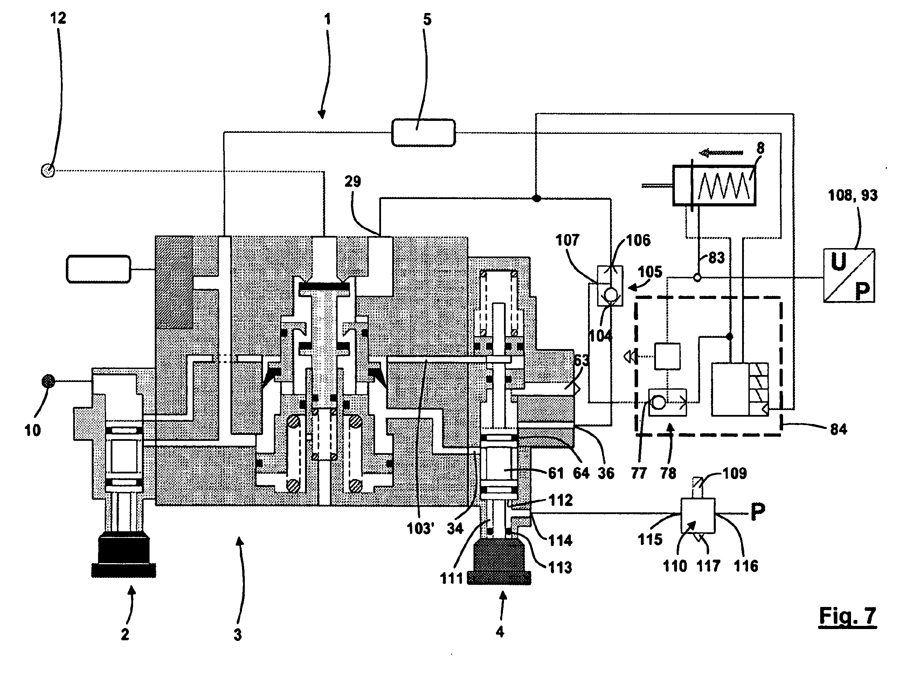

**Fig. 7** zeigt eine Bremsanlage 1, welche grundsätzlich der Bremsanlage 1 gemäß Fig. 5 entspricht mit entsprechend ausgebildetem Löseventil 2, Anhängerbremsventil 3 und Parkventil 4, Baueinheit 84 und Kombi-Bremszylinder 7 und weiteren pneumatischen Bauelementen und Wirkverbindungen. Während allerdings gemäß Fig. 5 der Druckraum 19 des Löseventils 2 mit dem Anschluss 35 des Parkventils 4 über eine externe Leitung 103 verbunden ist, ist gemäß Fig. 7 diese Leitung als innere Leitung 103' durch das Anhängerbremsventil 3 geführt. Weiterhin ist abweichend zu Fig. 5 der Anschluss 36 nicht unmittelbar mit dem ersten Eingang 77 des Wechselventils 78 verbunden, sondern der Anschluss 36 des Parkventils 4 ist mit einem ersten Eingang 104 eines Wechselventils 105 verbunden. Der zweite Eingang 106 ist mit dem Anschluss 29 des Anhängerbremsventils verbunden, während der Ausgang 107 des Wechselventils 105 mit dem ersten Eingang 77 des Wechselventils 78 verbunden ist.

Ein Druck-Spannungs-Wandler 108 erfasst den Druck in einer Leitung zwischen dem Anschluss 36 des Parkventils 4 und der Federspeicherbremse 8, hier in der Feststellbremsleitung 83. Der Druck-Spannungs-Wandler 108 stellt eine Erfassungseinrichtung 93 für den Betriebszustand des Parkventils 4 und der Federspeicherbremse 8 dar. Das Ausgangssignal des Druck-Spannungs-Wandlers 108 wird einer Steuereinrichtung 96 des Anhängers 87 zugeführt und/oder einer Übertragungseinrichtung 94, über welche das Signal des Druck-Spannungs-Wandlers 108 oder ein entsprechend aufbereitetes Signal an das Zugfahrzeug 86 übertragen wird, in welcher die Signaleinrichtung 97 geeignet angesteuert wird. Weiterhin ist die Steuereinrichtung 96 des Anhängers 87 mit einem Steuereingang 109 eines Magnetventils 110 verbunden.

Für die in Fig. 7 dargestellte erfindungsgemäße Ausgestaltung besitzt das Parkventil 4 eine zusätzliche Steuerkammer 111, deren Druck auf eine Kolbenfläche 112 des Ventilelements 61 einwirkt. Für das dargestellte Ausführungsbeispiel ist die Steuerkammer 111 zwischen dem Betätigungsorgan 67 und der Steuerkante 65 ausgebildet, wozu das Gehäuse 60 ausgangsseitig gegenüber dem Ventilelement 61 über ein weiteres Dichtelement 113 abgedichtet ist. In die Steuerkammer 111 mündet ein Anschluss 114 des Parkventils 4, welcher mit einem Anschluss 115 des Magnetventils 110 verbunden ist. Ein weiterer Anschluss 116 des Magnetventils 110 ist mit einer Druckquelle verbunden, beispielsweise einem Vorratsbehälter 25, 5 oder der Vorratsleitung 11. Das Magnetventil 110 ist als 3/2-Wegeventil ausgebildet und verbindet in einer ersten Betriebsstellung den Anschluss 115 und damit die Steuerkammer 111 1 mit einer Entlüftung 117, während das Magnetventil 110 in einer zweiten Betriebsstellung die Anschlüsse 115 und 116 miteinander verbindet, also die Steuerkammer 111 mit Druckluft aus der Druckluftquelle versorgt.

Die Funktionsweise der erfindungsgemäßen Bremsanlage ist, unter Umständen in Ergänzung der zuvor beschriebenen Funktionsweisen, wie folgt: Sowohl im Fahrbetrieb als auch für abgestelltes Fahrzeug erkennt der Druck-Spannungs-Wandler 108 den Betriebszustand von der Federspeicherbremse 8 und damit auch des Parkventils 4. Der Betriebszustand kann, insbesondere für mit dem Zugfahrzeug 86 gekoppelten Anhänger 87, an das Zugfahrzeug übermittelt werden und dort über die Signaleinrichtung 97 dem Fahrer angezeigt werden. Will der Fahrer nun den Zug 85 bewegen, kann der Fahrer über die Betätigungseinrichtung 98 und zwischengeschaltete Steuereinrichtungen den Steuereingang 109 derart elektrisch ansteuern, dass das Magnetventil 110 aus der in Fig. 7 wirksamen ersten Betriebsstellung in die zweite Betriebsstellung überführt wird. Dies hat zur Folge, dass die Steuerkammer 111 mit Druck beaufschlagt wird. Die an der Kolbenfläche 117 erzeugte Kraft verschiebt das Ventilelement 61 aus der in Fig. 7 dargestellten Stellung weiter in das Innere, so dass die Steuerkante 64 den Anschluss 36 von der Entlüftung 63 trennt, während eine Verbindung zwischen dem Anschluss 34 des Parkventils 4 und dem Anschluss 36 geschaffen wird. Über den Vorratsdruck, welcher von dem Anhängerbremsventil 3 an dem Anschluss 34 bereitgestellt wird, kann, hier unter Zwischenschaltung des Wechselventils 105 und der Regeleinrichtung 84, die Feststellbremsleitung 83 und die Federspeicherbremse 8 mit Vorratsdruck versorgt werden, was mit dem Lösen der Federspeicherbremse verbunden ist. Es versteht sich, dass eine entsprechende Anordnung auch Einsatz finden kann, wenn das Parkventil 4, und unter Umständen auch das Anhängerbremsventil 3, abweichend oder vereinfacht zu den in Fig. 1 bis 7 dargestellten Ausführungsformen ausgebildet ist. Allerdings gewährleistet die in Fig. 7 eine mögliche zusätzliche sicherheitsrelevante Funktion: Für geeignete Auslegung des maximalen Drucks in der Steuerkammer 111 und der Größe der Kolbenfläche 112 sowie der Steifigkeit der Betätigungsfeder 74 und der Wirkfläche des Kolbens 72 kann die zuvor geschilderte Überführung des Parkventils 4 aus der ersten Betriebsstellung in die zweite Betriebsstellung durch Ansteuerung des Magnetventils 110 davon abhängig gemacht werden, ob in der Betätigungskammer 73 ein ausreichender Druck vorhanden ist. Ist beispielsweise der Kupplungskopf Vorrat nicht mit dem Zugfahrzeug 86 gekoppelt und liegt in der Betätigungskammer 73 somit kein Vorratsleitungsdruck vor, kann die Kraft der Betätigungsfeder 74 so groß sein, dass die von der Druckbeaufschlagung der Steuerkammer 111 auf die Kolbenfläche 112 ausgeübte Kraft nicht ausreicht, um das Ventilelement 61 zu verschieben. Entsprechendes kann gelten, wenn der Vorratsbehälter 5 nicht ausreichend gefüllt ist, so dass auf einfache Weise gewährleistet ist, dass die geschilderte automatische Überführung des Parkventils 4 in die zweite Betriebsstellung lediglich dann erfolgt, wenn in dem Vorratsbehälter 5 ein ausreichender Druck aufgebaut ist, um eine Bremsung des Anhängers 87 über die Betriebsbremse zu ermöglichen. Es versteht sich, dass die Ansteuerung des Magnetventils 110 über den Steuereingang 109 nicht lediglich durch die manuelle Betätigung der Betätigungseinrichtung 98 durch den Fahrer erfolgen kann. Ebenfalls möglich ist, dass eine Steuereinrichtung automatisiert den Steuereingang 109 ansteuert, bspw. wenn eine Aufnahme des Fahrbetriebs detektiert wird, oder die Weitergabe des Signals der Betätigungseinrichtung 98 von anderen Betriebsbedingungen abhängig macht, beispielsweise von einem Befüllungszustand des Vorratsbehälters 5, der über einen weiteren Sensor erfasst werden kann, oder von dem Signal der Prüfeinrichtung 100, die für das Lösen der Federspeicherbremse 8 signalisieren muss, dass die Kopplung 88 ordnungsgemäß hergestellt ist.

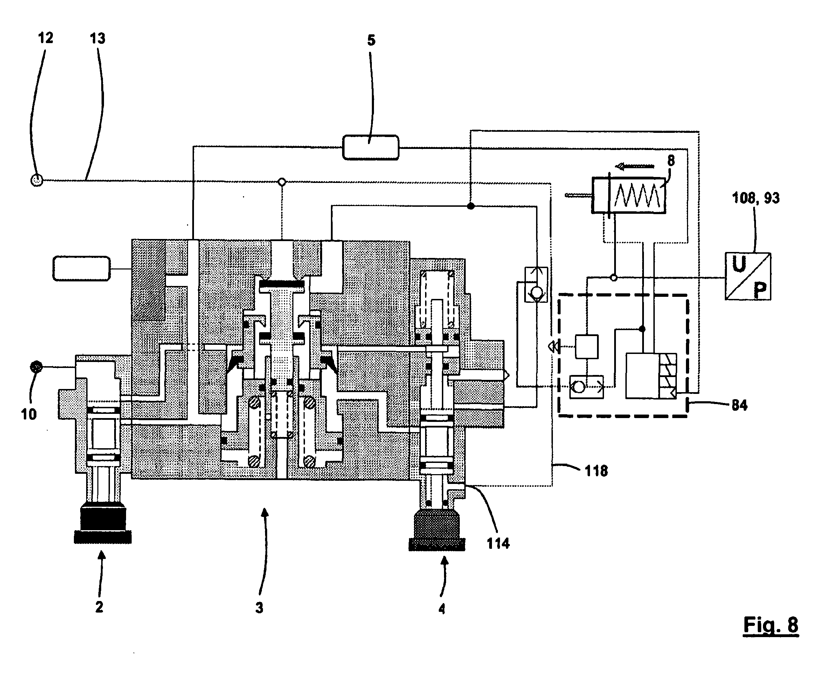

Abweichend zu dem in Fig. 7 dargestellten Ausführungsbeispiel ist in Fig. 8 der Anschluss 114 über eine Leitung 118 mit dem Kupplungskopf Bremse 12 bzw. der Bremssteuerleitung 13 pneumatisch verbunden. In diesem Fall erfolgt eine Druckbeaufschlagung der Steuerkammer 111 bei einer erstmaligen Betätigung der Betriebsbremse, für welche ein Druck in der Bremssteuerleitung 13 aufgebaut wird. In Abwandlung kann entsprechend der Anschluss 114 mit dem Anschluss 29, der Steuerleitung 31, dem Anschluss 39 oder der Betriebsbremse 9 pneumatisch verbunden sein.

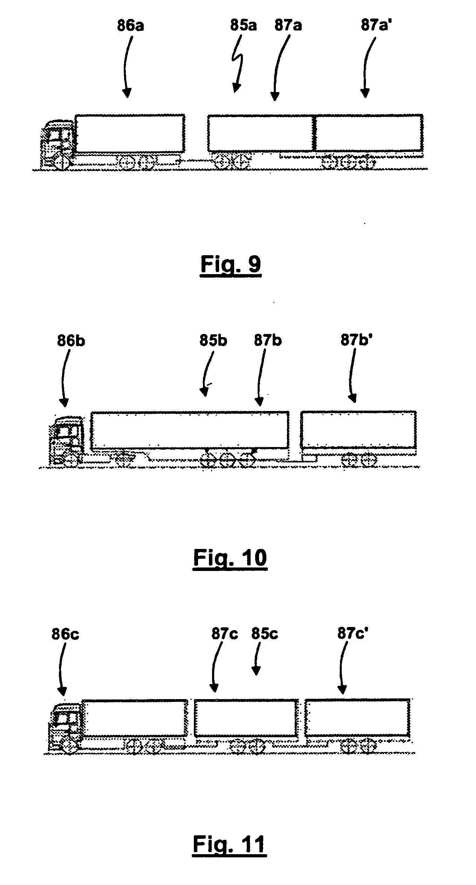

**Fig. 9 bis 11** zeigen unterschiedliche Züge, die hier mit einem Zugfahrzeug 86 und zwei Anhängern 87', 87" ausgebildet sind. Bei diesen Zügen können zukünftig automatische Kupplungseinrichtungen eingesetzt werden. Derartige Züge werden auch als Gliederzüge oder "EuroCombi" bezeichnet. Mit zunehmender Zahl der Anhänger erhöht sich die Bedeutung der erfindungsgemäßen Vorteile, insbesondere dass der Fahrer informiert wird über den Zustand eines Parkventils und/oder ein Parkventil von dem Zugfahrzeug 86 lösen kann, ohne die Fahrerkabine verlassen zu müssen.

Für das in Fig. 9 dargestellte Ausführungsbeispiel ist der Zug 85a ausgebildet mit einem herkömmlichen, antriebsstarken Zugfahrzeug 86a in Form eines dreiachsigen Lastkraftwagens oder Motorwagens mit Aufbau oder Ladefläche. An das Zugfahrzeug 86a angekoppelt sind Anhänger 87a, 87a', die als Sattelauflieger mit sogenanntem Doppelachs-Dolly ausgebildet sind.

Fig. 10 zeigt eine Ausführungsvariante eines Zuges 85b, bei der das Zugfahrzeug 86b als Sattelzugfahrzeug ausgebildet ist, an den in an sich üblicher Weise ein Auflieger oder Trailer als Anhänger 87b angekoppelt ist und insbesondere über ein starre Deichsel ein Tandem-Anhänger als Anhänger 87b' angekoppelt ist.

Schließlich zeigt Fig. 11 einen Zug 85c, bei welchem das Zugfahrzeug 86c mit einem Dreiachs-Motorwagen mit Aufbau gebildet ist. An ein derartiges Zugfahrzeug 86c sind zwei Anhänger 87c und 87c' angekoppelt, die jeweils mit einer starren Deichsel ausgestattet sind und als Doppelachs- bzw. Tandem-Anhänger ausgebildet sind.

Weitere, hier nicht näher dargestellte mögliche Ausbildungsformen derartiger Züge sind
- eine Sattelzugmaschine mit zwei Sattelaufliegern, was auch als "B-Train" bekannt ist,
- ein verlängerter Motorwagen mit Aufbau, Sattelkupplung und einem Auflieger,
- ein Motorwagen mit Aufbau und einem dreiachsigen Anhänger,
- ein zweiteiliger Gliederzug mit langem Vierachs-Motorwagen mit Aufbau und vergleichbar langem Zentraldreiachs-Anhänger.

Derartige überlange Gliederzüge können eine Gesamtlänge von bis zu 25,25 m besitzen und ein Gesamtgewicht von bis zu 60 t. Derartige überlange Züge sind in der Richtlinie EG 96/53/EG angesprochen und befinden sich derzeit im Versuchsstadium. Weitere Details und Ausführungen sind der Internetseite http://de.wikipedia.org/wiki/eurocombi zu entnehmen.

### BEZUGSZEICHENLISTE

| | | | |
|---|---|---|---|
| 1 | Bremsanlage | 31 | Steuerleitung |
| 2 | Löseventil | 32 | Leitung |
| 3 | Anhängerbremsventil | 33 | zweiter Eingang Wechselventil |
| 4 | Parkventil | 34 | Anschluss Parkventil |
| 5 | Vorratsbehälter | 35 | Anschluss Parkventil |
| 6 | Regeleinrichtung | 36 | Anschluss Parkventil |
| 7 | Kombi-Bremszylinder | 37 | erster Eingang Wechselventil |
| 8 | Federspeicherbremse | 38 | Ausgang |
| 9 | Betriebsbremse | 39 | Anschluss |
| 10 | Kupplungskopf Vorrat | 40 | Gehäuse |
| 11 | Vorratsleitung | 41 | Steuerelement |
| 12 | Kupplungskopf Bremse | 42 | Feder |
| 13 | Bremssteuerleitung | 43 | Ventilsitz |
| 14 | Wechselventil | 44 | Ventil |
| 15 | Rückschlagventil | 45 | Ausnehmung |
| 16 | Anschluss Löseventil | 46 | Kolben |
| 17 | Anschluss Löseventil | 47 | Ringkammer |
| 18 | Anschluss Löseventil | 48 | Ringkammer |
| 19 | Druckraum | 49 | Rückschlagventil |
| 20 | Steuerschieber | 50 | Kammer |
| 21 | Betätigungsorgan | 51 | Bohrung |
| 22 | Anschluss | 52 | Ventil |
| 23 | Anschluss | 53 | Bund |
| 24 | Anschluss | 54 | Ventilsitz |
| 25 | Behälter Nebenverbraucher | 55 | Ventilkörper |
| 26 | Anschluss | 56 | Rückschlagventil |
| 27 | Anschluss | 57 | Feder |
| 28 | Anschluss | 58 | Steuereinheit |
| 29 | Anschluss | 59 | Bohrung |
| 30 | Anschluss | 60 | Gehäuse |
| 61 | Ventilelement | 91 | Kopplung mechanisch |
| 62 | Entlüftungskammer | 92 | Kopplung elektrisch |
| 63 | Entlüftung | 93 | Erfassungseinrichtung |
| 64 | Steuerkante | 94 | Übertragungseinrichtung |
| 65 | Steuerkante | 95 | Fahrerkabine |
| 66 | Ringkammer | 96 | Steuereinrichtung |
| 67 | Betätigungsorgan | 97 | Signaleinrichtung |
| 68 | Betätigungseinheit | 98 | Betätigungseinrichtung |
| 69 | Bohrung | 99 | Steuereinrichtung |
| 70 | Trennwand | 100 | Prüfeinrichtung |
| 71 | Fortsatz | 101 | Sendeeinrichtung |
| 72 | Kolben | 102 | Fahrbeginn-Erkennungseinr. |
| 73 | Betätigungskammer | 103 | Leitung |
| 74 | Betätigungsfeder | 104 | erster Eingang |
| 75 | Sicherungsring | 105 | Wechselventil |
| 76 | Ventilelement | 106 | zweiter Eingang |
| 77 | erster Eingang | 107 | Ausgang |
| 78 | Wechselventil | 108 | Druck-Spannungs-Wandler |
| 79 | zweiter Eingang | 109 | Steuereingang |
| 80 | Betriebsbremsleitung | 110 | Magnetventil |
| 81 | Ausgang | 111 | Steuerkammer |
| 82 | Schnelllöseventil | 112 | Kolbenfläche |
| 83 | Feststellbremsleitung | 113 | Dichtelement |
| 84 | Baueinheit | 114 | Anschluss |
| 85 | Zug | 115 | Anschluss |
| 86 | Zugfahrzeug | 116 | Anschluss |
| 87 | Anhänger | 117 | Entlüftung |
| 88 | Kopplung | 118 | Leitung |
| 89 | Kopplung Vorrat | | |
| 90 | Kopplung Bremse | | |

## Patentansprüche

1. Pneumatische Bremsanlage (1) mit einem auf einem Anhänger (87) angeordneten und manuell betätigten Parkventil (4), welches
a) eine erste Betriebsstellung besitzt, in der eine Federspeicherbremse (8) des Anhängers (87) wirksam ist, sowie
b) eine zweite Betriebsstellung besitzt, in der die Federspeicherbremse (8) gelöst ist, wobei
c) eine Erfassungseinrichtung (93) für den Betriebszustand der Federspeicherbremse (8) des Anhängers (87) oder des Parkventils (4) vorgesehen ist,
d) der Anhänger (87) eine Übertragungseinrichtung (94) besitzt, über welche der durch die Erfassungseinrichtung (93) erfasste Betriebszustand der Federspeicherbremse (8) zu einem Zugfahrzeug (86) übertragbar ist.

2. Bremsanlage (1) nach Anspruch 1, **dadurch gekennzeichnet, dass** das Zugfahrzeug (86) eine Signaleinrichtung (97) besitzt, welche einem Fahrer signalisiert, dass die Federspeicherbremse (8) wirksam ist und/oder die Federspeicherbremse (8) gelöst ist.

3. Bremsanlage (1) nach Anspruch 2, **dadurch gekennzeichnet, dass**
a) eine Fahrbeginn-Erkennungseinrichtung (102) vorgesehen ist,
b) eine Steuereinrichtung vorgesehen ist und
c) die Steuereinrichtung die Signaleinrichtung lediglich aktiviert, wenn die Fahrbeginn-Erkennungseinrichtung (102) indiziert, dass ein Fahrbetrieb tatsächlich oder mit erhöhter Wahrscheinlichkeit bevorsteht.

4. Bremsanlage (1) nach einem der vorgehenden Ansprüche, **dadurch gekennzeichnet, dass** eine Steuereinrichtung (96) vorhanden ist, welche einen Fahrbeginn verhindert, wenn die Erfassungseinrichtung (93) signalisiert, dass die Federspeicherbremse (8) noch wirksam ist.

5. Bremsanlage (1) nach einem der vorhergehenden Ansprüche, **dadurch gekennzeichnet, dass** die Erfassungseinrichtung (93) für den Betriebszustand der Federspeicher bremse (8) des Anhängers (87) als Wegsensor ausgebildet ist, welcher einen Betätigungsweg der Federspeicherbremse (8) erfasst.

6. Bremsanlage (1) nach einem der Ansprüche 1 bis 4, **dadurch gekennzeichnet, dass** die Erfassungseinrichtung (93) für den Betriebszustand der Federspeicherbremse (8) des Anhängers (87) als Druck-Spannungs-Wandler (108) ausgebildet ist, welcher einen Druck in der Federspeicherbremse (8), in einer Zuführleitung oder in dem Parkventil (4) erfasst.

7. Bremsanlage (1) nach einem der Ansprüche 1 bis 4, **dadurch gekennzeichnet, dass** die Erfassungseinrichtung (93) für den Betriebszustand des Parkventils (4) als Wegsensor ausgebildet ist, welcher einen Stellweg des Parkventils (4) erfasst.

8. Bremsanlage (1) nach einem der Ansprüche 1 bis 4, **dadurch gekennzeichnet, dass** die Erfassungseinrichtung (93) für den Betriebszustand der Federspeicherbremse (8) des Anhängers (87) als Momentensensor ausgebildet ist, welcher ein Bremsmoment der Federspeicherbremse (8) erfasst.

9. Pneumatische Bremsanlage (1) mit einem auf einem Anhänger (87) angeordneten und manuell betätigten Parkventil (4), welches
a) eine erste Betriebsstellung besitzt, in der eine Federspeicherbremse (8) des Anhängers (87) wirksam ist, sowie
b) eine zweite Betriebsstellung besitzt, in der die Federspeicherbremse (8) gelöst ist, insbesondere nach einem der vorhergehenden Ansprüche,
wobei
c) ein mit dem Anhänger (87) gekoppeltes oder koppelbares Zugfahrzeug (86) eine manuell vom Fahrer betätigte Betätigungseinrichtung (98) besitzt, über die die Betriebsstellung der Federspeicherbremse (8) des Anhängers (87) oder des Parkventils (4) veränderbar ist.

10. Bremsanlage (1) nach Anspruch 9, **dadurch gekennzeichnet, dass** eine Prüfeinrichtung (100) vorhanden ist, welche die Kopplung (88) zwischen Anhänger (87) und Zugfahrzeug (86) überprüft, und dass mittels der Betätigungseinrichtung (98) lediglich dann eine Veränderung der Betriebsstellung des Parkventils (4) oder der Federspeicherbremse (8) herbeiführbar ist, wenn die Prüfeinrichtung (100) signalisiert, dass eine ordnungsgemäße Kopplung (88) zwischen Anhänger (87) und Zugfahrzeug (86) gegeben ist.

11. Bremsanlage (1) nach Anspruch 9 oder 10, **dadurch gekennzeichnet, dass** die Betätigungseinrichtung (98) des Zugfahrzeugs (86) über ein elektrisches Signal mit dem Anhänger (87) kommuniziert.

12. Pneumatische Bremsanlage (1) mit einem auf einem Anhänger (87) angeordneten und manuell betätigten Parkventil (4), welches
a) eine erste Betriebsstellung besitzt, in der eine Federspeicherbremse (8) des Anhängers (87) wirksam ist, sowie
b) eine zweite Betriebsstellung besitzt, in der die Federspeicherbremse (8) gelöst ist, insbesondere nach einem der vorhergehenden Ansprüche,
wobei
c) für den Beginn eines Fahrbetriebs eines mit dem Anhänger (87) gekoppelten Zugfahrzeugs (86) das Parkventil (4) automatisch in die zweite Betriebsstellung überführbar ist.

13. Bremsanlage (1) nach Anspruch 12, **dadurch gekennzeichnet, dass**
a) eine Fahrbeginn-Erkennungseinrichtung (102) vorgesehen ist,
b) eine Steuereinrichtung (96) vorgesehen ist und
c) mittels der Steuereinrichtung (96) das Parkventil (4) automatisch in die zweite Betriebsstellung überführbar ist, wenn die Fahrbeginn-Erkennungseinrichtung (102) indiziert, dass ein Fahrbetrieb tatsächlich oder mit erhöhter Wahrscheinlichkeit bevorsteht.

14. Bremsanlage (1) nach Anspruch 13, **dadurch gekennzeichnet, dass** die Steuereinrichtung (96) mit einem elektrischen Aktuator des Parkventils (4) verbunden ist, wodurch der Aktuator durch die Steuereinrichtung (96) derart ansteuerbar ist, dass dieser das Parkventil (4) in zweite Betriebsstellung überführt.

15. Bremsanlage (1) nach einem der vorhergehenden Ansprüche, **dadurch gekennzeichnet, dass** das Parkventil (4) eine Kolbenfläche (112) besitzt, die pneumatisch derart beaufschlagbar ist, dass das Parkventil (4) aus der ersten Betriebsstellung in die zweite Betriebsstellung überführt wird.

16. Bremsanlage (1) nach Anspruch 15, **dadurch gekennzeichnet, dass** die pneumatische Beaufschlagung der Kolbenfläche (112) durch eine manuell vom Fahrer betätigte Betätigungseinrichtung (98) des Zugfahrzeugs (86) auslösbar ist.

17. Bremsanlage (1) nach Anspruch 15 oder 16, **dadurch gekennzeichnet,dass** die pneumatische Beaufschlagung der Kolbenfläche (112) automatisch auslösbar ist, wenn ein Beginn eines Fahrbetriebs erfolgt oder mit hoher Wahrscheinlichkeit bevorsteht.

18. Bremsanlage (1) nach einem der Ansprüche 15 bis 17, **dadurch gekennzeichnet, dass** die pneumatische Beaufschlagung der Kolbenfläche (112) automatisch mit einer Betätigung der Betriebsbremse durch den Fahrer in dem Zugfahrzeug (86) auslösbar ist.

19. Bremsanlage (1) nach einem der Ansprüche 9 bis 18, **dadurch gekennzeichnet, dass** die Überführung des Parkventils (4) in die zweite Betriebsstellung dann unterbunden ist, wenn ein Betriebsbremsdruck unterhalb eines vorgegebenen Schwellwerts liegt.

20. Bremsanlage (1) nach einem der vorhergehenden Ansprüche, **dadurch gekennzeichnet, dass** eine Fahrbeginn-Erkennungseinrichtung (102) einen Beginn eines Fahrbetriebs indiziert, wenn
a) eine Tür der Fahrerkabine (95) des Zugfahrzeugs (86) geöffnet und/oder geschlossen wird,
b) eine Sitzbelegungserkennungseinrichtung signalisiert, dass ein Fahrer auf dem Fahrersitz Platz genommen hat,
c) ein Gang eingelegt wird,
d) ein Schalter in der Fahrerkabine (95) betätigt wird,
e) ein Pedal des Zugfahrzeugs (86) betätigt wird,
f) sich das Zugfahrzeug (86) in Bewegung setzt,
g) eine Kopplungskraft oder deren Änderung zwischen Zugfahrzeug (86) und Anhänger (87) einen Schwellwert überschreitet,
g) eine Geschwindigkeit des Zugfahrzeugs (86) einen Schwellwert überschreitet,
h) eine Reset-To-Ride-Funktion eines Hebe-Senk-Ventils ausgelöst wird und/oder
i) ein GPS-System eine Bewegung des Fahrzeugs indiziert.

21. Verwendung einer Bremsanlage (1) nach einem der vorhergehenden Ansprüche mit einem automatischen Kopplungssystem zwischen einem Anhänger (87) und einem Zugfahrzeug (86) oder zwischen zwei Anhängern, bei welchem eine Kopplung zwischen Anhänger (87) und Zugfahrzeug (86) oder den beiden Anhängern mit der Relativbewegung von Anhänger (87) und Zugfahrzeug (86) oder Anhänger und Anhänger aufeinander zu automatisch hergestellt wird.

## Claims

1. Pneumatic brake system (1) with a manually operable parking valve (4) located on a trailer (87) having
a) a first operating state wherein a spring brake (8) of the trailer (87) is activated and
b) a second operating state wherein the spring brake (8) is deactivated,
wherein
c) a detecting or sensing device (93) for the operating state of the parking brake (8) of the trailer (87) or of the operating state of the parking valve (4) is provided and
d) the trailer (87) comprises a transfer device (94) for transferring the operating state of the parking brake (8) sensed by the detecting or sensing device (93) to a tractor (86).

2. Brake system (1) of claim 1 wherein the tractor (86) comprises a signal device (97) for signalling to a driver that the spring brake (8) is activated and/or that the spring brake (8) is deactivated.

3. Brake system (1) of claim 2 wherein
a) a start-of-drive detection device (102) is provided,
b) a control device is provided and
c) the control device only activates the signal device if the start-of-drive detection device (102) indicates that a drive mode is actually imminent or is imminent with an increased likelihood.

4. Brake system (1) of one of claims 1 to 3 wherein a control device (96) is provided which inhibits a start-of-drive if the detecting or sensing device (93) signalizes that the spring brake (8) is still active.

5. Brake system (1) of one of claims 1 to 4 wherein the detecting or sensing device (93) for the operating state of the spring brake (8) of the trailer (87) is a displacement sensor sensing an actuating displacement of the spring brake (8).

6. Brake system (1) of one of claims 1 to 4 wherein the detecting or sensing device (93) for the operating state of the spring brake (8) of the trailer (87) is a pressure-voltage-transformer (108) sensing a pressure in the spring brake (8), in a supply line or in the parking valve (4).

7. Brake system (1) of one of claims 1 to 4 wherein the detecting or sensing device (93) for the operating state of the parking valve (4) is a displacement sensor sensing a displacement of the parking valve (4).

8. Brake system (1) of one of claims 1 to 4 wherein the detecting or sensing device (93) for the operating state of the spring brake (8) of the trailer (87) is a torque sensor sensing a brake torque of the spring brake (8).

9. Pneumatic brake system (1) with a manually operated parking valve (4) located on a trailer (87) comprising
a) a first operating state wherein a spring brake (8) of the trailer (87) is activated and
b) a second operating state wherein the spring brake (8) is deactivated,
in particular brake system of one of claims 1 to 8,
wherein
c) a tractor (86) coupled or coupleable with the trailer (87) comprises an actuating device (98) manually operated by the driver wherein the actuating device (98) is usable for changing the operating state of the spring brake (8) of the trailer (87) or of the parking valve (4).

10. Brake system (1) of claim 9 wherein a test device (100) is provided which tests the coupling (88) between the trailer (87) and the tractor (86), wherein the actuating device (98) is only usable for changing the operating state of the parking valve (4) or the spring brake (8) if the test device (100) signalizes that there is a correct coupling (88) between the trailer (87) and the tractor (86).

11. Brake system (1) of claim 9 or 10 wherein the actuating device (98) of the tractor (86) communicates via an electrical signal with the trailer (87).

12. Pneumatic brake system (1) with a manually operated parking valve (4) located on a trailer (87) comprising
a) a first operating state wherein a spring brake (8) of the trailer (87) is activated and
b) a second operating state wherein the spring brake (8) is deactivated,
in particular parking system (1) of one of claims 1 to 11,
wherein
c) at the beginning of a drive mode of a tractor (86) coupled with the trailer (87) the parking valve (4) is automatically transferred into the second operating state.

13. Brake system (1) of claim 12 wherein
a) a start-of-drive detection device (102) is provided,
b) a control device (96) is provided and
c) by means of the control device (96) the parking valve (4) is automatically transferrable into the second operating state if the start-of-drive detection device (102) indicates that a drive mode is actually imminent or imminent with an increased likelihood.

14. Brake system (1) of claim 13 wherein the control device (96) is linked with an electrical actuator of the parking valve (4) for providing that the actuator is controllable by the control device (96) such that the parking valve (4) is transferred into the second operating state.

15. Brake system (1) of one of claims 1 to 14 wherein the parking valve (4) comprises a piston surface (112) wherein it is possible to pneumatically bias the piston surface (112) such that the parking valve (4) is transferred from the first operating state into the second operating state.

16. Brake system (1) of claim 15 wherein it is possible to trigger or activate the pneumatic bias of the piston surface (112) by an actuating device (98) of the tractor (86), which is operated manually by the driver.

17. Brake system (1) of claim 15 or 16 wherein it is possible to automatically trigger the pneumatic bias of the piston surface (112) if a drive mode is started or is imminent with a large likelihood.

18. Brake system (1) of one of claims 15 to 17 wherein it is possible to automatically trigger or actuate the pneumatic bias of the piston surface (112) with an actuation of the service brake by the driver of the tractor (86).

19. Brake system (1) of one of claims 9 to 18 wherein the transfer of the parking valve (4) into the second operating state is disabled if the service brake pressure is below a predetermined threshold.

20. Brake system (1) of one of claims 1 to 19 wherein a start-of-drive detection device (102) indicates a start-of-drive if
a) a door of the drivers cabin (95) of the tractor (86) is opened and/or closed,
b) a detection device for detecting if a seat is occupied signalizes that a driver has taken seat on the driver's seat,
c) a gear is chosen,
d) a switch in the driver's cabin (95) is operated,
e) a pedal of the tractor (86) is operated,
f) the tractor (86) starts movement,
g) a coupling force between the tractor (86) and the trailer (87) or a change of this coupling force exceeds a threshold,
g) a velocity of the tractor (86) exceeds a threshold,
h) a reset-to-ride-function of a lifting-lowering-valve is acivated and/or
i) a GPS-system indicates a movement of the vehicle.

21. _Use of a brake system (1) of one of claims 1 to 20 with an automatic coupling system between a trailer (87) and a tractor (86) or between two trailers wherein the coupling system automatically establishes a coupling between the trailer (87) and the tractor (86) or between the two trailers with a relative movement of the trailer (87) and tractor (86) or of the two trailers towards each other.

## Revendications

1. Installation de freinage (1) pneumatique comportant une valve de stationnement (4) qui est actionnée manuellement et est disposée sur une remorque (87) et qui
a) possède une première position de service, dans laquelle un frein à accumulation (8) de la remorque (87) est actif, et
b) possède une deuxième position de service, dans laquelle le frein à accumulation (8) est desserré,
dans laquelle installation
c) est prévu un dispositif de détection (93) pour détecter la position de service du frein à accumulation (8) de la remorque (87) ou de la valve de stationnement (4),
d) la remorque (87) comporte un dispositif de transmission (94), par lequel la position de service du frein à accumulation (8), détectée par le dispositif de détection (93), peut être transmise vers un véhicule de traction (86).

2. Installation de freinage (1) selon la revendication 1, **caractérisée en ce que** le véhicule de traction (86) comporte un dispositif de signalisation (97) qui signale au conducteur que le frein à accumulation (8) est actif et/ou que le frein à accumulation (8) est desserré.

3. Installation de freinage (1) selon la revendication 2, **caractérisée en ce que**
a) il est prévu un dispositif de détection de démarrage du véhicule (102),
b) il est prévu un dispositif de commande, et
c) ledit dispositif de commande active le dispositif de signalisation uniquement lorsque le dispositif de détection de démarrage du véhicule (102) indique que le véhicule est réellement ou très probablement prêt à rouler.

4. Installation de freinage (1) selon l'une quelconque des revendications précédentes, **caractérisée en ce qu'**il est prévu un dispositif de commande (96) qui empêche le démarrage du véhicule lorsque le dispositif de détection (93) signale que le frein à accumulation (8) est encore actif.

5. Installation de freinage (1) selon l'une quelconque des revendications précédentes, **caractérisée en ce que** le dispositif de détection (93) pour la position de service du frein à accumulation (8) de la remorque (87) est réalisé sous la forme d'un capteur de déplacement qui détecte une trajectoire d'actionnement du frein à accumulation (8).

6. Installation de freinage (1) selon l'une quelconque des revendications 1 à 4, **caractérisée en ce que** le dispositif de détection (93) pour la position de service du frein à accumulation (8) de la remorque (87) est réalisé sous la forme d'un capteur de pression et de tension qui détecte une pression dans le frein à accumulation (8), dans une conduite d'admission ou dans la valve de stationnement (4).

7. Installation de freinage (1) selon l'une quelconque des revendications 1 à 4, **caractérisée en ce que** le dispositif de détection (93) pour la position de service du frein à accumulation (8) de la remorque (87) est réalisé sous la forme d'un capteur de déplacement qui détecte une trajectoire de réglage de la valve de stationnement (4).

8. Installation de freinage (1) selon l'une quelconque des revendications 1 à 4, **caractérisée en ce que** le dispositif de détection (93) pour la position de service du frein à accumulation (8) de la remorque (87) est réalisé sous la forme d'un capteur de couples qui détecte un couple de freinage du frein à accumulation (8).

9. Installation de freinage (1) pneumatique comportant une valve de stationnement (4) qui est actionnée manuellement et est disposée sur une remorque (87) et qui
a) possède une première position de service, dans laquelle un frein à accumulation (8) de la remorque (87) est actif, et
b) possède une deuxième position de service, dans laquelle le frein à accumulation (8) est desserré,
en particulier selon l'une quelconque des revendications précédentes,
dans laquelle
c) un véhicule de traction (86) couplé ou apte à être couplé à la remorque (87) comporte un dispositif de manoeuvre (98) actionné manuellement par le conducteur et permettant de modifier la position de service du frein à accumulation (8) de la remorque (87) ou de la valve de stationnement (4).

10. Installation de freinage (1) selon la revendication 9, **caractérisée en ce qu'**il est prévu un dispositif de contrôle (100), qui vérifie le couplage (88) entre la remorque (87) et le véhicule de traction (86), et **en ce que** le dispositif de manoeuvre (98) permet de modifier la position de service de la valve de stationnement (4) ou du frein à accumulation (8) uniquement lorsque le dispositif de contrôle (100) signale qu'un couplage (88) correct est établi entre la remorque (87) et le véhicule de traction (86).

11. Installation de freinage (1) selon la revendication 9 ou 10, **caractérisée en ce que** le dispositif de manoeuvre (98) du véhicule de traction (86) communique avec la remorque (87) via un signal électrique.

12. Installation de freinage (1) pneumatique comportant une valve de stationnement (4) qui est actionnée manuellement et est disposée sur une remorque (87) et qui
a) possède une première position de service, dans laquelle un frein à accumulation (8) de la remorque (87) est actif, et
b) possède une deuxième position de service, dans laquelle le frein à accumulation (8) est desserré,
en particulier selon l'une quelconque des revendications précédentes,
dans laquelle
c) la valve de stationnement (4) peut être amenée automatiquement dans la deuxième position de service pour que le véhicule de traction (86) couplé à la remorque (87) puisse commencer à rouler.

13. Installation de freinage (1) selon la revendication 12, **caractérisée en ce que**
a) il est prévu un dispositif de détection de démarrage du véhicule (102),
b) il est prévu un dispositif de commande (96), et
c) ledit dispositif de commande (96) amène automatiquement la valve de stationnement (4) dans la deuxième position de service lorsque le dispositif de détection de démarrage du véhicule (102) indique que le véhicule est réellement ou très probablement prêt à rouler.

14. Installation de freinage (1) selon la revendication 13, **caractérisée en ce que** le dispositif de commande (96) est relié à un actionneur électrique de la valve de stationnement (4), moyennant quoi l'actionneur peut être activé par le dispositif de commande (96) de telle sorte que ledit actionneur amène la valve de stationnement (4) dans la deuxième position de service.

15. Installation de freinage (1) selon l'une quelconque des revendications précédentes, **caractérisée en ce que** la valve de stationnement (4) comporte une surface de piston (112) qui peut être sollicitée par voie pneumatique pour amener la valve de stationnement (4) hors de la première position de service dans la deuxième position de service.

16. Installation de freinage (1) selon la revendication 15, **caractérisée en ce que** la sollicitation pneumatique de la surface de piston (112) peut être déclenchée par un dispositif de manoeuvre (98) du véhicule de traction (86), lequel dispositif est actionné manuellement par le conducteur.

17. Installation de freinage (1) selon la revendication 15 ou 16, **caractérisée en ce que** la sollicitation pneumatique de la surface de piston (112) peut être déclenchée automatiquement lorsque le véhicule commence à rouler ou est très probablement prêt à rouler.

18. Installation de freinage (1) selon l'une quelconque des revendications 15 à 17, **caractérisée en ce que** la sollicitation pneumatique de la surface de piston (112) peut être déclenchée automatiquement avec une manoeuvre du frein de service par le conducteur dans le véhicule de traction (86).

19. Installation de freinage (1) selon l'une quelconque des revendications 9 à 18, **caractérisée en ce que** la manoeuvre amenant la valve de stationnement (4) dans la deuxième position de service est empêchée lorsque la pression dans le frein de service est inférieure à une valeur seuil définie.

20. Installation de freinage (1) selon l'une quelconque des revendications précédentes, **caractérisée en ce qu'**un dispositif de détection de démarrage du véhicule (102) indique que le véhicule commence à rouler, lorsque
a) une porte de la cabine (95) du véhicule de traction (86) s'ouvre et/ou se ferme,
b) un dispositif de détection de l'occupation d'un siège signale qu'un conducteur a pris place sur le siège du conducteur,
c) une vitesse est enclenchée,
d) un interrupteur dans la cabine (95) est actionné,
e) une pédale du véhicule de traction (86) est actionnée,
f) le véhicule de traction (86) se met en mouvement,
g) une force de couplage ou une variation de celle-ci entre le véhicule de traction (86) et la remorque (87) est supérieure à une valeur seuil,
g) une vitesse du véhicule de traction (86) est supérieure à une valeur seuil,
h) une fonction reset-to-ride d'une vanne de levage et descente est déclenchée, et/ou
i) un système GPS indique un mouvement du véhicule.

21. Utilisation d'une installation de freinage (1) selon l'une quelconque des revendications précédentes, comportant un système de couplage automatique entre une remorque (87) et un véhicule de traction (86) ou entre deux remorques, selon laquelle un couplage entre une remorque (87) et un véhicule de traction (86) ou les deux remorques est établi automatiquement par le mouvement relatif de la remorque (87) par rapport au véhicule de traction (86) ou d'une remorque par rapport à l'autre remorque.
